(19) Europäisches Patentamt / European Patent Office / Office européen des brevets

(11) **EP 4 362 524 A1**

(12) **EUROPEAN PATENT APPLICATION**
published in accordance with Art. 153(4) EPC

(43) Date of publication:
**01.05.2024 Bulletin 2024/18**

(21) Application number: **22827984.0**

(22) Date of filing: **22.03.2022**

(51) International Patent Classification (IPC):
**H04W 16/14** *(2009.01)*        **H04W 16/18** *(2009.01)*
**H04W 16/28** *(2009.01)*

(52) Cooperative Patent Classification (CPC):
**H04W 16/14; H04W 16/18; H04W 16/28**

(86) International application number:
**PCT/JP2022/013078**

(87) International publication number:
**WO 2022/270064 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.06.2021   JP 2021104431**

(71) Applicant: **Sony Group Corporation
Tokyo 108-0075 (JP)**

(72) Inventors:
• **FURUICHI Sho
  Tokyo 108-0075 (JP)**
• **KURIKI Hiroto
  Tokyo 108-0075 (JP)**

(74) Representative: **Witte, Weller & Partner
Patentanwälte mbB
Postfach 10 54 62
70047 Stuttgart (DE)**

(54) **COMMUNICATION CONTROL DEVICE AND COMMUNICATION CONTROL METHOD**

(57)    An appropriate protection zone is created in a case where a communication device performs dynamic beamforming.

A communication control device of the present disclosure includes a processing unit that calculates a metric based on radio wave signal strength for a plurality of reference points for each of a plurality of beams transmittable by a communication device, and creates a first protection zone in which the communication device is protected from radio wave interference on the basis of the metric.

*FIG. 8*

**Description**

TECHNICAL FIELD

The present disclosure relates to a communication control device and a communication control method.

BACKGROUND ART

Hitherto, due to increase in a wireless environment in which various wireless systems are mixed and an enrichment of content provided wirelessly, a problem of exhaustion of radio resources (spectrum) that can be allocated to the wireless systems has emerged. Accordingly, as a means for extracting necessary radio resources, "dynamic spectrum sharing (dynamic spectrum access (DSA))" using temporal and spatial vacancies (white spaces) in a frequency band allocated to a specific wireless system has rapidly attracted attention.

In the United States, a mechanism of DSA called Citizens Broadband Radio Service (CBRS) is introduced in the 3550-3700 MHz band and is commercially deployed. The current operation is based on CBRS Baseline Standards (Non Patent Documents 1, 3, 4, and the like) called Release 1 formulated by the standardization organization Wireless Innovation Forum. In Release 1, a spectrum access system (SAS) uses an antenna gain and a horizontal plane azimuth angle as static antenna pattern (beam pattern) information of a citizens broadband radio service device (CBSD) in order to perform protection processing of a protected entity. In recent years, with the aim of more effective use of frequencies and the like, discussions on an advanced standard called Release 2 are in progress. In CBRS Release 2, a feature called "Enhanced Antenna Pattern" is defined in WINNF-TS-1001 (Non Patent Document 6) and WINNF-TS-3002 (Non Patent Document 7). In the "Enhanced Antenna Pattern", a horizontal plane beam pattern envelope and a vertical plane beam pattern envelope, and an antenna gain, a horizontal plane azimuth angle, and a vertical plane azimuth angle are used as static antenna pattern (beam pattern) information. In the future, introduction of dynamic beamforming utilizing an active antenna system (AAS) is expected as further advancement.

CITATION LIST

NON PATENT DOCUMENT

Non Patent Document 1: WINNF-TS-0112-V1.9.1 "Requirements for Commercial Operation in the U.S. 3550-3700 MHz Citizens Broadband Radio Service Band"
Non Patent Document 2: Electronic Code of Federal Regulations, Title 47, Chapter I, Subchapter A, Part 1, Subpart X Spectrum Leasing [available at https://ecfr.federalregister.gov/current/title-47/chapter-I/subchapter-D/part-96]
Non Patent Document 3: WINNF-TS-0061-V1.5.1 Test and Certification for Citizens Broadband Radio Service (CBRS); Conformance and Performance Test Technical Specification; SAS as Unit Under Test (UUT) [available at https://cbrs.wirelessinnovation.org/release-1-of-the-baseline-standard-specifications]
Non Patent Document 4: WINNF-TS-0016-V1.2.4 Signaling Protocols and Procedures for Citizens Broadband Radio Service (CBRS): Spectrum Access System (SAS) - Citizens Broadband Radio Service Device (CBSD) Interface Technical Specification [available at https://cbrs.wirelessinnovation.org/release-1-of-the-baseline-standard-specifications]
Non Patent Document 5: 940660 D02 CBSD Handshake Procedures v02 [available at https://apps.fcc.gov/kdb/GetAttachment.html?id=RQe7oZJVSW t0fCcNiBV%2Bfw%3D%3D&desc=940660%20D02%20CPE-CBSD%20Handshake%20Procedures%20v02&tracking_number=22929 7]
Non Patent Document 6: WINNF-TS-1001-V1.2.0 "CBRS Operational and Functional Requirements (Release 2)" [available at https://cbrs.wirelessinnovation.org/enhancements-to-baseline-specifications]
Non Patent Document 7: WINNF-TS-3002-V1.1.1 "Signaling Protocols and Procedures for Citizens Broadband Radio Service (CBRS): Extensions to Spectrum Access System (SAS) - Citizens Broadband Radio Service Device (CBSD) Interface Technical Specification (Release 2)" [available at https://cbrs.wirelessinnovation.org/enhancements-to-baseline-specifications]

SUMMARY OF THE INVENTION

PROBLEMS TO BE SOLVED BY THE INVENTION

A priority access license (PAL) protection area (PPA), which is one of protected entities in the CBRS Release 1 specification, is calculated by the SAS on the basis of position information of a CBSD operated on a priority access basis in the PPA, an EIRP capability value (EIRP capability), an antenna gain, which is static antenna pattern information, and a horizontal plane azimuth angle. The EIRP is maximum equivalent isotropic radiated power. For each CBSD in a PPA Cluster List (a set of CBSDs belonging to the PPA), an area in which the radio field intensity satisfies -96 dBm/10 MHz is calculated, and all calculated areas are combined to construct one PPA. In the constructed PPA, the SAS performs protection processing so that an aggregated interference power level from other CBSDs outside the PPA does not exceed -80 dBm/10 MHz.

However, when the CBSD performs dynamic beamforming by utilizing the AAS, the beam does not necessarily face a direction (for example, an azimuth angle) considered at the time of PPA calculation. Although a coverage built by the beam spreads to the outside of the PPA and operates on the basis of Priority Access, there is a possibility that the CBSD is not protected from aggregated interference by other CBSDs outside the PPA as appropriate.

In view of the above problems, an object of the present disclosure is to create an appropriate protection zone in a case where a communication device performs dynamic beamforming.

Furthermore, the problems and objects to be solved by the present disclosure are not necessarily limited to the above. For example, it may be an object to efficiently create the protection zone against a problem that the creation of the protection zone described above is inefficient.

SOLUTIONS TO PROBLEMS

A communication control device of the present disclosure includes a processing unit that calculates a metric based on radio wave signal strength for a plurality of reference points for each of a plurality of beams transmittable by a communication device, and creates a first protection zone in which the communication device is protected from radio wave interference on the basis of the metric.

A communication control method of the present disclosure includes calculating a metric based on radio wave signal strength for a plurality of reference points for each of a plurality of beams transmittable by a communication device, and creating a first protection zone in which the communication device is protected from radio wave interference on the basis of the metric.

A computer program of the present disclosure causes a computer to execute a step of calculating a metric based on radio wave signal strength for a plurality of reference points for each of a plurality of beams transmittable by a communication device, and a step of creating a first protection zone in which the communication device is protected from radio wave interference on the basis of the metric.

BRIEF DESCRIPTION OF DRAWINGS

Fig. 1 is a diagram illustrating a system model in an embodiment of the present disclosure.
Fig. 2 is a diagram illustrating a network configuration to which autonomous decision-making can be applied.
Fig. 3 is a diagram illustrating a network configuration to which centralized decision-making can be applied.
Fig. 4 is a diagram illustrating a network configuration in a case where both the centralized decision-making and distributed decision-making are applied.
Fig. 5 is a diagram describing a three-tier structure in CBRS.
Fig. 6 is a diagram describing a flow of signaling between terminals.
Fig. 7 is a supplementary diagram describing a method of calculating PPA.
Fig. 8 is a block diagram of a communication system according to a first embodiment of the present disclosure.
Fig. 9 is a diagram illustrating a device of a PAL holder connected to the communication control device.
Fig. 10 is a diagram illustrating an example of an operation sequence of the communication system according to the first embodiment.
Fig. 11 is a diagram illustrating an example of setting a plurality of reference points on a radial straight line extending in an azimuth angle direction corresponding to a certain horizontal direction.
Fig. 12 is a diagram describing an example of a beam movable range and a beam movable step size in a CBSD.
Fig. 13 is a diagram illustrating an example of a plurality of beams that can be transmitted by a base station.
Fig. 14 is a flowchart illustrating an example of processing of calculating a set of reference points that satisfy a threshold for the CBSD.

Fig. 15 is an explanatory diagram of Modification 1.
Fig. 16 is a flowchart of an example of processing according to a second embodiment.
Fig. 17 is a flowchart of an example of processing according to a third embodiment.
Fig. 18 is a flowchart of an example of processing according to a fourth embodiment.
Fig. 19 is a diagram illustrating an example in which a specific condition is satisfied and an example in which the specific condition is not satisfied.
Fig. 20 is a diagram illustrating an example in which a specific condition is satisfied and another example in which the specific condition is not satisfied.
Fig. 21 is a diagram illustrating an example of a beam-based protection zone (beam-based PPA) obtained for each beam.
Fig. 22 is a diagram illustrating an example of Baseline PPA.
Fig. 23 is a diagram illustrating three examples of Reconfigured PPA.
Fig. 24 is a flowchart of an example of processing of creating a beam unit PPA according to a fifth embodiment.
Fig. 25 is a flowchart of another example of processing of creating a PPA in units of beams according to the fifth embodiment.
Fig. 26 is a flowchart of still another example of processing of creating a PPA in units of beams according to the fifth embodiment.

## MODE FOR CARRYING OUT THE INVENTION

Hereinafter, embodiments of the present disclosure will be described with reference to the drawings. In one or more embodiments illustrated in the present disclosure, elements included in each of the embodiments can be combined with each other, and the combined result also forms a part of the embodiments described in the present disclosure.

<<1. Assumed representative scenario>>

<1.1 System model>

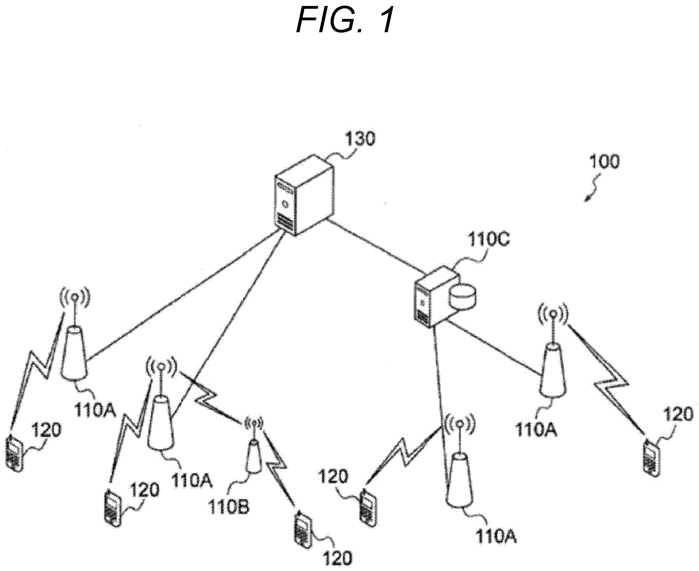

Fig. 1 illustrates a system model in an embodiment of the present invention. As illustrated in Fig. 1, this system model is represented by a communication network 100 including wireless communication, and typically includes the following entities.

· Communication device 110
· Terminal 120
· Communication control device 130

Furthermore, this system model includes at least a primary system and a secondary system using the communication network 100. The primary system and the secondary system are configured by the communication device 110 or the communication device 110 and the terminal 120. Various communication systems can be treated as the primary system or the secondary system, but in the present embodiment, it is assumed that the primary system and the secondary system use some or all of a frequency band. Note that the respective frequency bands allocated to the primary system and the secondary system may partially or entirely overlap or may not overlap at all. That is, this system model will be described as a model of a wireless communication system related to dynamic spectrum sharing (dynamic spectrum access (DSA)). Note that this system model is not limited to systems related to dynamic spectrum sharing.

Typically, the communication device 110 is a wireless device that provides a wireless communication service to the terminal 120, such as a wireless base station (Base Station, Node B, eNB, gNB, or the like) or a wireless access point. That is, the communication device 110 provides a wireless communication service to enable wireless communication of the terminal 120. Furthermore, the communication device 1 may be a wireless relay device or an optical extension device called a remote radio head (RRH). In the following description, unless otherwise noted, the communication device 110 will be described as an entity constituting the secondary system.

The coverage (communication region) provided by the communication device 110 is allowed to have various sizes from a large size such as a macro cell to a small size such as a pico cell. Like a distributed antenna system (DAS), a plurality of communication devices 110 may form one cell. Furthermore, in a case where the communication device 110 has a capability of beamforming, a cell or a service area may be formed for each beam.

In the present disclosure, it is assumed that there are two different types of communication devices 110.

In the present disclosure, the communication device 110 that can access the communication control device 130 without using a wireless path that requires permission of the communication control device 130 is referred to as a "communication device 110A". Specifically, for example, the communication device 110 capable of a wired Internet connection can be regarded as the "communication device 110A". Furthermore, for example, even in a wireless relay device that does not have a wired Internet connection function, if a wireless backhaul link using a spectrum that does not require permission of the communication control device 130 is constructed with another communication device 110A, such a wireless relay device may also be regarded as the "communication device 110A".

In the present disclosure, the communication device 110 that cannot access the communication control device 130 without a wireless path that requires permission of the communication control device 130 is referred to as a "communication device 110B". For example, a wireless relay device that needs to construct a backhaul link using a spectrum that requires permission of the communication control device 130 can be regarded as a "communication device 110B". Furthermore, for example, a device such as a smartphone having a wireless network provision function represented by tethering and using a spectrum that requires permission of the communication control device 130 in both the backhaul link and the access link may be handled as the "communication device 110B".

The communication device 110 is not necessarily fixedly installed. For example, the communication device 110 may be installed in a mobile object such as an automobile. Furthermore, the communication device 110 does not necessarily need to exist on the ground. For example, the communication device 110 may be included in an object existing in the air or space, such as an aircraft, a drone, a helicopter, a high altitude platform station (HAPS), a balloon, or a satellite. Furthermore, for example, the communication device 110 may be included in an object existing on the sea or under the sea, such as a ship or a submarine. Typically, such a mobile communication device 110 corresponds to the communication device 110B, and performs wireless communication with the communication device 110A to secure an access path to the communication control device 130. As a matter of course, even the mobile communication device 110 can be handled as the communication device 110A as long as the spectrum used in the wireless communication with the communication device 110A is not managed by the communication control device 130.

In the present disclosure, unless otherwise specified, the description "communication device 110" includes both meanings of the communication device 110A and the communication device 110B, and may be replaced with either one.

The communication device 110 can be used, operated, or managed by various operators. For example, a mobile network operator (MNO), a mobile virtual network operator (MVNO), a mobile network enabler (MNE), a mobile virtual network enabler (MVNE), a shared facility operator, a neutral host network (NHN) operator, a broadcaster, an enterprise, an educational institution (educational institutions, respective boards of education of local governments, or the like), a real estate (building, apartment, or the like) administrator, an individual, and the like can be assumed as operators related to the communication device 110. Note that the company related to the communication device 110 is not particularly limited. Further, the communication device 110A may be a shared facility used by a plurality of carriers. Furthermore, different companies may perform installation, use, and management of the facilities.

The communication device 110 operated by the company is typically connected to the Internet via a core network. Further, operation, management, and maintenance are performed by a function called Operation, Administration & Maintenance (OA&M). Furthermore, for example, as illustrated in Fig. 1, there may be an intermediate device (network manager) 110C that integrally controls the communication device 110 in the network. Note that there may be cases where the intermediate device is the communication device 110 or cases where the intermediate device is the communication control device 130.

The terminal 120 (User Equipment, User Terminal, User Station, Mobile Terminal, Mobile Station, or the like) is a device that performs wireless communication by a wireless communication service provided by the communication device 110. Typically, a communication device such as a smartphone corresponds to the terminal 120. Note that a device having a wireless communication function can correspond to the terminal 120. For example, a device such as a business camera having a wireless communication function can also correspond to the terminal 120 even if the wireless communication is not a main application. Furthermore, a communication device that transmits data to the terminal 120, such as a wireless station for broadcasting business (field pickup unit (FPU)) that transmits an image for television broadcasting or the like from an outside (site) of a broadcast station to the broadcast station in order to broadcast sports or the like, also corresponds to the terminal 120. Furthermore, the terminal 120 is not necessarily used by a person. For example, like what is called machine type communication (MTC), a device such as a factory machine or a sensor installed in a building may be network-connected to operate as the terminal 120. Furthermore, a device called customer premises equipment (CPE) provided to ensure connection to the Internet may behave as the terminal 120.

Furthermore, as represented by device-to-device (D2D) and vehicle-to-everything (V2X), the terminal 120 may include a relay communication function.

Furthermore, similarly to the communication device 110, the terminal 120 does not need to be fixedly installed or exist on the ground. For example, an object existing in the air or space, such as an aircraft, a drone, a helicopter, a satellite, or the like, may operate as the terminal 120. Furthermore, for example, an object existing on the sea or under the sea, such as a ship or a submarine, may operate as the terminal 120.

In the present disclosure, unless otherwise noted, the terminal 120 corresponds to an entity that terminates a wireless link using a spectrum that requires permission of the communication control device 130. However, depending on a function included in the terminal 120 or an applied network topology, the terminal 120 can perform an operation equivalent to that of the communication device 110. In other words, depending on the network topology, there may be cases where a device that can correspond to the communication device 110 such as a wireless access point corresponds to the terminal 120, or cases where a device that can correspond to the terminal 120 such as a smartphone corresponds to the communication device 110.

The communication control device 130 is typically a device that determines, permits, gives an instruction on, and/or manages communication parameters of the communication device 110. For example, database servers called TV white space database (TVWSDB), geolocation database (GLDB), spectrum access system (SAS), and automated frequency coordination (AFC) correspond to the communication control device 130. In other words, a database server having an authority and a role such as authentication and supervision of radio wave use related to secondary use of a frequency can be regarded as the communication control device 130.

The communication control device 130 also corresponds to a database server having a role different from the above-described role. For example, a control device that performs radio wave interference control between communication devices represented by a Spectrum Manager (SM) in EN 303 387 of the European Telecommunications Standards Institute (ETSI), a Coexistence Manager (CM) in the Institute of Electrical and Electronics Engineers (IEEE) 802.19.1-2018, a Coexistence Manager (CxM) in CBRSA-TS-2001, or the like also corresponds to the communication control device 130. Furthermore, for example, a registered location secure server (RLSS) defined in IEEE 802.11-2016 also corresponds to the communication control device 130. That is, not limited to these examples, an entity responsible for determination, use permission, instruction, management, and the like of the communication parameters of the communication device 110 may be referred to as the communication control device 130. Basically, the control target of the communication control device 130 is the communication device 110, but the communication control device 130 may control the terminal 120 subordinate to the communication device 110.

The communication control device 130 also corresponds to a combination of a plurality of database servers having different roles. For example, CBRS Alliance SAS (CSAS) which is a combination of SAS and CxM illustrated in CBRSA-TS-2001 can also be regarded as the communication control device 130.

The communication control device 130 can also be achieved by mounting software having a function equivalent to that of the database server on one database server. For example, a SAS having a function or software equivalent to CxM can also be regarded as the communication control device 130.

There may be a plurality of communication control devices 130 having similar roles. In a case where there is a plurality of communication control devices 130 having similar roles, at least one of the following three types of decision-making topologies can be applied to the communication control device 130.

· Autonomous decision-making
· Centralized decision-making
· Distributed decision-making

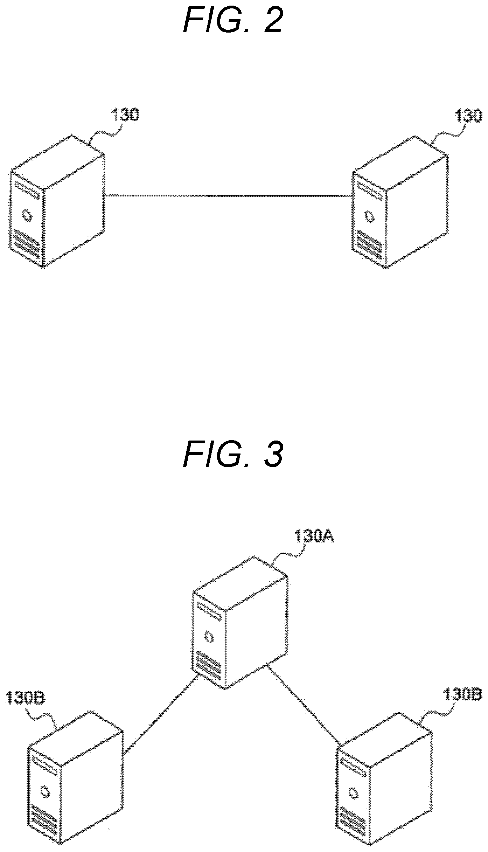

The autonomous decision-making is a decision-making topology in which an entity (the decision-making entity, here the communication control device 130) that makes a decision makes a decision independently from another decision-making entity. The communication control device 130 independently calculates necessary spectrum allocation and interference control. For example, in a case where a plurality of communication control devices 130 is arranged in a distributed manner as illustrated in Fig. 2, the autonomous decision-making can be applied.

The centralized decision-making is a decision-making topology in which a decision-making entity delegates decision-making to another decision-making entity. In a case where the centralized decision-making is performed, for example, a model as illustrated in Fig. 3 can be assumed. Fig. 3 illustrates a model (what is called master-slave type) in which one communication control device 130 centrally controls a plurality of communication control devices 130. In the model of Fig. 3, the communication control device 130A, which is the master, can control the communication control devices 130B, which are a plurality of slaves, to intensively make decisions.

The distributed decision-making (distributed decision-making) is a decision-making topology in which a decision-making entity makes a decision in cooperation with another decision-making entity. For example, while a plurality of communication control devices 130 independently makes a decision as in the autonomous decision-making in Fig. 2, mutual adjustment of decision-making results, negotiation, and the like performed by each communication control device 130 after making a decision may correspond to "distributed decision-making". Furthermore, for example, in the centralized decision-making in Fig. 3, for the purpose of load balancing or the like, performing dynamic delegation of decision-making authority to each slave communication control device 130B, deletion thereof, or the like by the master communication control device 130A can also be regarded as "distributed decision-making".

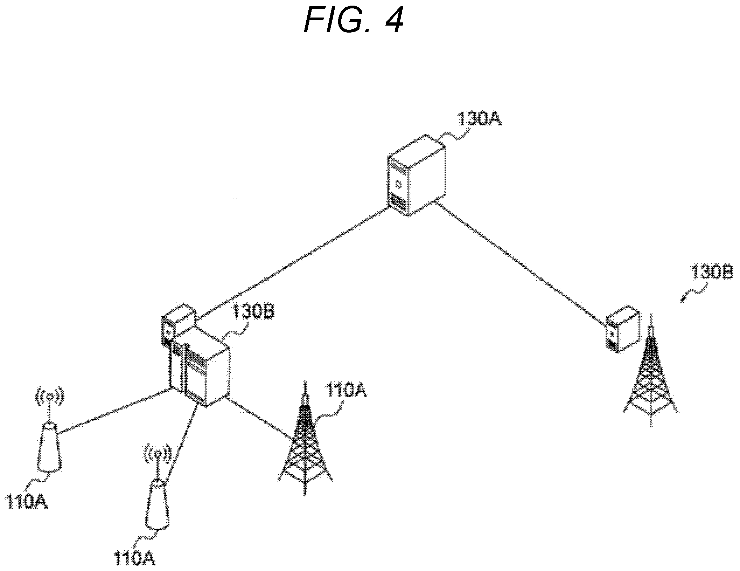

There may be cases where both the centralized decision-making and the distributed decision-making are applied. In Fig. 4, the slave communication control device 130B operates as an intermediate device that bundles the plurality of communication devices 110. It is not necessary for the master communication control device 130A to control the communication devices 110 bundled by the slave communication control device 130B, that is, the secondary system configured by the slave communication control device 130B. As described above, as a modification, implementation as illustrated in Fig. 4 is also possible.

The communication control device 130 may also acquire necessary information from entities other than the communication device 110 and the terminal 120 of the communication network 100 for its role. Specifically, for example, information necessary for protecting the primary system can be acquired from a database (regulatory database) managed or operated by a radio administration agency (national regulatory authority (NRA)) of a country or a region. Examples of the regulatory database include the Universal Licensing System (ULS) operated by the Federal Communications Commissions (FCC), and the like. Examples of information necessary for protecting the primary system include position information of the primary system, communication parameters of the primary system, out-of-band emission limit (OOBE), adjacent channel leakage ratio (ACLR), adjacent channel selectivity, fading margin, protection ratio (PR), and the like. In a region where a fixed numerical value, an acquisition method, a derivation method, and the like are defined by a law or the like in order to protect the primary system, it is desirable to use information defined by the law as information necessary for protecting the primary system.

Furthermore, a database that records the communication device 110 and the terminal 120 that have been subjected to conformity authentication, such as an equipment authorization system (EAS) managed by the Office of Engineering and Technology (OET) of the FCC, also corresponds to the regulatory database. From such a regulatory database, it is possible to acquire information regarding an operable spectrum of the communication device 110 or the terminal 120, information regarding maximum equivalent isotropic radiated power (EIRP), and the like. Naturally, the communication control device 130 may use these pieces of information for protecting the primary system.

Furthermore, it can also be assumed that the communication control device 130 acquires radio wave sensing information from a radio wave sensing system installed and operated for the purpose of radio wave detection in the primary system. As a specific example, in Citizens Broadband Radio Service (CBRS) in the United States, the communication control device 130 acquires radio wave detection information of a ship radar as a primary system from a radio wave sensing system called an environmental sensing capability (ESC). Furthermore, in a case where the communication device 110 and the terminal 120 have a sensing function, the communication control device 130 may acquire radio wave detection information of the primary system from these.

Furthermore, it can also be assumed that the communication control device 130 acquires the activity information of the primary system from a portal system that manages the activity information of the primary system. As a specific example, in Citizens Broadband Radio Service (CBRS) in the United States, the communication control device 130 acquires activity information of a primary system from a calendar-type system called Informing Incumbent Portal. Protection of the primary system is achieved by enabling a protection area called Dynamic Protection Area (DPA) on the basis of the acquired activity information. Protection of the primary system is also implemented by an equivalent system called Informing Incumbent Capability (IIC) in a similar manner.

The interface between the respective entities constituting this system model may be wired or wireless. For example, not only a wired line but also a wireless interface that does not depend on spectrum sharing may be used as an interface between the communication control device 130 and the communication device 110. Examples of the wireless interface that does not depend on spectrum sharing include a wireless communication line provided by a mobile communication carrier via a licensed band, Wi-Fi communication using an existing license-exempt band, and the like.

<1.2 Terms related to spectrum and sharing>

As described above, the present embodiment will be described assuming a dynamic spectrum sharing (Dynamic Spectrum Access) environment. As a representative example of the dynamic spectrum sharing, a mechanism defined by the CBRS in the United States (that is, a mechanism defined in Part 96 Citizens Broadband Radio Service of the FCC Rules of the United States) will be described.

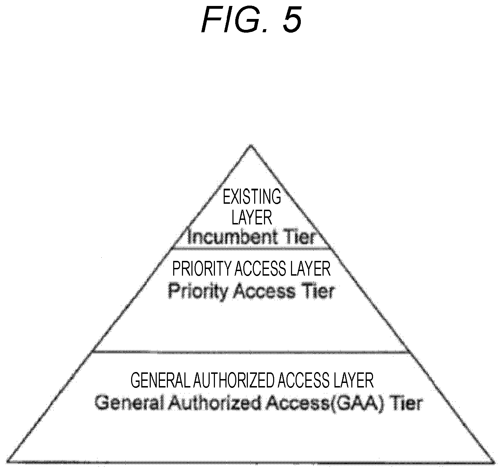

In the CBRS, as illustrated in Fig. 5, each of users in the frequency band is classified into one of three groups. This group is referred to as a tier. The three groups are referred to as an incumbent tier (existing layer), a priority access tier (priority access layer), and a general authorized access (GAA) tier (general authorized access layer), respectively.

The incumbent tier is a group including existing users who conventionally use frequency bands. The existing user is also generally referred to as a primary user. In the CBRS, the Department of Defense (DOD), fixed satellite operators, and new rule excepted radio broadband licensees (Grandfathered Wireless Broadband Licensees (GWBL)) in the United States are defined as existing users. The incumbent tier is not required to avoid interference to the priority access tier and the GAA tier with lower priorities or to suppress use of the frequency band. Furthermore, the incumbent tier is protected from interference by the priority access tier and the GAA tier. That is, users of the incumbent tier can use the frequency band without considering the existence of other groups.

The priority access tier is a group of users who use the frequency band on the basis of the above-described priority access license (PAL). A user of the priority access tier is also generally referred to as a secondary user. When the frequency band is used, the priority access tier is required to avoid interference and to suppress use of the frequency band for the incumbent tier having a higher priority than the priority access tier. On the other hand, neither avoiding interference nor suppressing use of the frequency band is required for the GAA tier having a lower priority than the priority access layer. Furthermore, the priority access tier is not protected from interference by the incumbent tier with a higher priority, but is protected from interference by the GAA tier with a lower priority.

The GAA tier is a group formed by frequency band users that do not belong to the incumbent tier and the priority access tier. Similarly to the priority access tier, in general, a user of the GAA tier is also referred to as a secondary user. However, since the priority of shared use is lower than that of the priority access tier, it is also referred to as a low priority secondary user. When the frequency band is used, the GAA tier is required to avoid interference and suppress use of the frequency band for the incumbent tier and the priority access tier having higher priorities. Furthermore, the GAA tier is not protected from interference by the incumbent tier and priority access tier with higher priority.

Although the CBRS mechanism has been described above as a representative example of the dynamic spectrum sharing, the present embodiment is not limited to the definition of CBRS. For example, as illustrated in Fig. 5, the CBRS generally employs a three-tier structure, but a two-tier structure may be employed in the present embodiment. Typical examples of the two-tier structure include authorized shared access (ASA), licensed shared access (LSA), evolved LSAs (eLSAs), TV band white space (TVWS), US 6 GHz band sharing, and the like. In the ASA, the LSA, and the eLSA, there is no GAA tier, and a structure equivalent to a combination of the incumbent tier and the priority access tier is employed. Further, in the TVWS and the US 6 GHz band sharing, there is no priority access tier, and a structure equivalent to a combination of the incumbent tier and the GAA tier is employed. Furthermore, there may be four or more tiers. Specifically, for example, four or more tiers may be generated by providing a plurality of intermediate layers corresponding to the priority access tiers and giving different priorities to the respective intermediate layers, and the like. Furthermore, for example, the tiers may be increased by similarly dividing the GAA tier and giving priorities, and the like. That is, each group may be divided.

Furthermore, the primary system of the present embodiment is not limited to the definition of CBRS. For example, as an example of the primary system, a wireless system such as TV broadcasting, a fixed microwave line (fixed system (FS)), a meteorological radar, a radio altimeter, a wireless train control system (communications-based train control), and a radio astronomy are assumed. In addition, it is not limited thereto, and any wireless system can be the primary system of the present embodiment.

Furthermore, as described above, the present embodiment is not limited to the environment of spectrum sharing. In general, in spectrum sharing or spectrum secondary use, an existing system that uses a target frequency band is referred to as a primary system, and a secondary user is referred to as a secondary system. However, in a case where the present embodiment is applied to an environment other than the spectrum sharing environment, they should be read by replacing with other terms. For example, a macrocell base station in a heterogeneous network (HetNet) may be the primary system, and a small cell base station or a relay station may be the secondary system. Furthermore, the base station may be a primary system, and a relay user equipment (UE) or a vehicle UE that implements D2D or V2X existing within its coverage may be the secondary system. The base station is not limited to a fixed type, and may be a portable type or a mobile type. In such a case, for example, the communication control device 130 of the present embodiment may be included in a core network, a base station, a relay station, a relay UE, or the like.

Furthermore, in a case where the present embodiment is applied to an environment other than the spectrum shared environment, the term "frequency" in the present disclosure is replaced with another term shared by the application destination. For example, terms such as "resource", "resource block", "resource element", "resource pool", "channel", "component carrier", "carrier", "subcarrier", and "bandwidth part (BWP)" or another term having a meaning equivalent or similar thereto are assumed to be used.

<<2. Description of various procedures assumed in present embodiment>>

Here, a basic procedure that can be used in the implementation of the present embodiment will be described. Note that up to <2.5> described later will be described on the assumption that the processing is mainly performed in the communication device 110A.

<2.1 Registration procedure>

A registration procedure is a procedure for registering information of a wireless system that intends to use the frequency band. More specifically, it is a procedure for registering a device parameter related to the communication device 110 of the wireless system in the communication control device 130. Typically, the registration procedure is started by that the communication device 110 representing a wireless system that intends to use the frequency band notifies the communication control device 130 of a registration request including a device parameter. Note that in a case where a plurality of communication devices 110 belongs to the wireless system that intends to use the frequency band, the device parameter of each of the plurality of communication devices is included in the registration request. Furthermore, a device that transmits the registration request as a representative of the wireless system may be appropriately determined.

<2.1.1 Details of required parameters>

The device parameter refers to, for example, the following information.

· Information regarding the user of the communication device 110 (hereinafter described as user information)
· Information unique to the communication device 110 (hereinafter described as unique information)
· Information regarding the position of the communication device 110 (hereinafter described as position information)
· Information regarding an antenna included in the communication device 110 (hereinafter described as antenna information)
· Information regarding the wireless interface included in the communication device 110 (hereinafter described as wireless interface information)
· Legal information regarding the communication device 110 (hereinafter described as legal information)
· Information regarding the installer of the communication device 110 (hereinafter described as installer information)
· Information regarding the group to which the communication device 110 belongs (hereinafter, group information)

The device parameter is not limited to the above. Information other than these may be handled as the device parameter. Note that the device parameter does not need to be transmitted once, and may be transmitted a plurality of times. That is, a plurality of registration requests may be transmitted for one registration procedure. In this manner, one procedure or one process in the procedure may be performed a plurality of times. This similarly applies to the procedure described below.

The user information is information related to the user of the communication device 110. For example, a user ID, an account name, a user name, a user contact address, a call sign, and the like can be assumed. The user ID and the account name may be independently generated by the user of the communication device 110 or may be issued in advance by the communication control device 130. As the call sign, it is desirable to use a call sign issued by the NRA.

The user information can be used, for example, in an application of interference resolution. As a specific example, in the spectrum use notification procedure described in <2.5> to be described later, even if the communication control device 130 makes the use stop determination on the spectrum being used by the communication device 110 and gives an instruction based on the use stop determination, there may be a case where notification of the spectrum use notification request of the spectrum is continuously provided. In this case, suspecting a failure of the communication device 110, the communication control device 130 can give a behavior check request for the communication device 110 to the user contact address included in the user information. Not limited to this example, in a case where it is determined that the communication device 110 is performing an operation against communication control performed by the communication control device 130, the communication control device 130 can make a contact using the user information.

The unique information is information that can specify the communication device 110, product information of the communication device 110, information regarding hardware or software of the communication device 110, and the like.

The information that can specify the communication device 110 can include, for example, a manufacturing number (serial number) of the communication device 110, an ID of the communication device 110, and the like. The ID of the communication device 110 may be uniquely assigned by the user of the communication device 110, for example.

The product information of the communication device 110 can include, for example, information regarding an authentication ID, a product model number, a manufacturer, and the like. The authentication ID is, for example, an ID given from a certificate authority in each country or region, such as an FCC ID in the United States, a CE number in Europe, and a technical standards conformity certification (technical conformity) in Japan. An ID issued by an industry association or the like on the basis of a unique authentication program may also be regarded as the authentication ID.

The unique information represented by these may be used, for example, for a permission list (allowlist) or a denial list (denylist). For example, in a case where any piece of information regarding the communication device 110 in operation is included in the denial list, the communication control device 130 can instruct the communication device 110 to stop using the spectrum in the spectrum use notification procedure described in <2.5> described later. Moreover, the communication control device 130 can take a behavior of not canceling the usage stop measure until the communication device 110 is cancelled from the denial list. Furthermore, for example, the communication control device 130 can reject registration of the communication device 110 included in the denial list. Furthermore, for example, the communication control device 130 can also perform an operation that does not consider the communication device 110 corresponding to the information included in the denial list in the interference calculation of the present disclosure or that considers only the communication device 110 corresponding to the information included in the permission list in the interference calculation.

Note that, in the present disclosure, the FCC ID may be used as information related to transmission power. For example, in an equipment authorization system (EAS) database, which is a type of regulatory database, information regarding a device for which authentication has been acquired can be acquired, and an application programming interface (API) thereof is also disclosed. For example, certified maximum EIRP information or the like can be included in the information together with the FCC ID. Since such power information is associated with the FCC ID, the FCC ID can be handled as transmission power information. Similarly, the FCC ID may be treated as equivalent to other information included in the EAS. Furthermore, not limited to the FCC ID, in a case where information associated with the authentication ID is present, the authentication ID may be treated as equivalent to the information.

The information regarding the hardware of the communication device 110 can include, for example, transmission power class information. For example, in Title 47 Code of Federal Regulations (C.F.R.) Part 96 in the United States, two types of classes Category A and Category B are defined as the transmission power class information, and information regarding the hardware of the communication device 110 conforming to the definition can include information regarding which of the two types of classes it belongs to. Furthermore, in TS 36.104 and TS 38.104 of 3rd Generation Partnership Project (3GPP), some classes of eNodeB and gNodeB are defined, and these definitions can also be used.

The transmission power class information can be used, for example, in an application of interference calculation. The interference calculation can be performed using the maximum transmission power defined for each class as the transmission power of the communication device 110.

The information regarding the software of the communication device 110 can include, for example, version information, a build number, and the like regarding an execution program in which processing necessary for interaction with the communication control device 130 is described. Furthermore, version information, a build number, and the like of software for operating as the communication device 110 may also be included.

The position information is typically information that can specify the position of the communication device 110. For example, it is coordinate information acquired by a positioning function represented by the Global Positioning System (GPS), Beidou, the Quasi-Zenith Satellite System (QZSS), Galileo, or the Assisted Global Positioning System (A-GPS). Typically, information related to latitude, longitude, ground level or sea level, altitude, and positioning error can be included. Alternatively, for example, the position information may be position information registered in an information management device managed by the National Regulatory Authority (NRA) or its entrusted institution. Alternatively, for example, coordinates of an X axis, a Y axis, and a Z axis with a specific geographical position as an origin may be used. Furthermore, together with such coordinate information, an identifier indicating whether the communication device 110 exists outdoors or indoors can be given.

Furthermore, the position information may include positioning accuracy information (location uncertainty). For example, both or one of a horizontal plane and a vertical plane may be provided as the positioning accuracy information. For example, the positioning accuracy information (location uncertainty) can be used as a correction value when calculating a distance to any point. Furthermore, for example, the positioning accuracy information can also be used as region information in which the communication device 110 may be located. In this case, it is used for processing of specifying spectrum information that can be used in the region indicated by the positioning accuracy information.

Furthermore, the position information may be information indicating a region in which the communication device 110 is located. For example, information indicating a region determined by the government, such as a postal code or an address, may be used. Furthermore, for example, the region may be indicated by a set of three or more geographic coordinates. These pieces of information indicating the region may be provided together with the coordinate information.

Furthermore, in a case where the communication device 110 is located indoors, information indicating the floor of a building where the communication device 110 is located can also be included in the position information. For example, an identifier indicating the number of floors, the ground, or the underground, or the like can be included in the position information. Furthermore, for example, information indicating a further closed space inside a building, such as a room number and a room name in the building, can be included in the position information.

Typically, the positioning function is desirably included in the communication device 110. However, there may be cases where performance of the positioning function does not meet the required accuracy. Furthermore, even if performance of the positioning function satisfies the required accuracy, it may not always be possible to acquire the position information that satisfies the required accuracy depending on the installation position of the communication device 110. Therefore, a device different from the communication device 110 may include the positioning function, and the communication device 110 may acquire information related to the position from the device. The device having the positioning function may be an available existing device, or may be provided by an installer of the communication device 110. In such a case, it is desirable that the position information measured by the installer of the communication device 110 is written in the communication device 110.

The antenna information is typically information indicating performance, a configuration, and the like of an antenna included in the communication device 110. Typically, for example, information such as an antenna installation height, a tilt angle (downtilt), a horizontal orientation (azimuth), a boresight, an antenna peak gain, and an antenna model can be included.

Furthermore, the antenna information can also include information regarding a formable beam. For example, information such as a beam width, a beam pattern, and an analog or digital beamforming capability can be included.

Furthermore, the antenna information can also include information regarding performance and configuration of multiple input multiple output (MIMO) communication. For example, information such as the number of antenna elements and the maximum number of spatial streams (or the number of MIMO layers) can be included. Furthermore, codebook information to be used, weight matrix information, and the like can also be included. The weight matrix information includes a unitary matrix, a zero-forcing (ZF) matrix, a minimum mean square error (MMSE) matrix, and the like, which are obtained by singular value decomposition (SVD), eigen value decomposition (EVD), block diagonalization (BD), and the like. Furthermore, in a case where the communication device 110 includes a function such as maximum likelihood detection (MLD) that requires nonlinear calculation, information indicating the included function may be included in the antenna information.

Furthermore, the antenna information may include a zenith of direction, departure (ZoD). The ZoD is a type of radio wave arrival angle. Note that instead of being provided in notification from the communication device 110, the ZoD may be estimated and provided in notification by another communication device 110 from radio waves radiated from the antenna of the communication device 110. In this case, the communication device 110 may be a device that operates as a base station or an access point, a device that performs D2D communication, a moving relay base station, or the like. The ZoD may be estimated by a radio wave direction of arrival estimation technology such as multiple signal classification (MUSIC) or estimation of signal propagation via rotation invariance techniques (ESPRIT). Furthermore, the ZoD can be used by the communication control device 130 as measurement information.

The wireless interface information is typically information indicating a wireless interface technology included in the communication device 110. For example, identifier information indicating a technology used in GSM, CDMA2000, UMTS, E-UTRA, E-UTRA NB-IoT, 5G NR, 5G NR NB-IoT or a further next generation cellular system can be included as the wireless interface information. Furthermore, identifier information indicating a derivative technology based on Long Term Evolution (LTE)/5G such as MulteFire, Long Term Evolution-Unlicensed (LTE-U), or NR-Unlicensed (NR-U) can be included. Furthermore, identifier information indicating a standard technology such as a metropolitan area network (MAN) such as WiMAX or WiMAX2+ or a wireless LAN of the IEEE 802.11 series can also be included. Furthermore, identifier information indicating an extended global platform (XGP) or a shared XGP (sXGP) may be used. It may be identifier information of a communications technology for local power, wide area (LPWA). Further, identifier information indicating a proprietary wireless technology can also be included. Furthermore, a version number or a release number of the technical specification that defines these technologies may also be included as the wireless interface information.

Furthermore, the wireless interface information can also include frequency band information supported by the communication device 110. For example, the frequency band information can be represented by an upper limit frequency, a lower limit frequency, a center frequency, a bandwidth, a 3GPP operating band number, or a combination of at least two of these, or the like. Furthermore, one or more pieces of frequency band information can be included in the wireless interface information.

The frequency band information supported by the communication device 110 can further include information indicating capability of a band extension technology such as carrier aggregation (CA) or channel bonding. For example, combinable band information or the like can be included. Further, the carrier aggregation can also include information regarding a band desired to be used as a primary component carrier (PCC) or a secondary component carrier (SCC). Furthermore, the number of component carriers (the number of CCs) that can be aggregated at the same time can be included.

The frequency band information supported by the communication device 110 may further include information indicating a combination of frequency bands supported by the dual connectivity and the multi connectivity. In addition, information of another communication device 110 that cooperatively provides the dual connectivity and the multi connectivity may also be provided. The communication control device 130 may perform determination of the communication control disclosed in the present embodiment in consideration of another communication device 110 having a cooperative relationship or the like in subsequent procedures.

The frequency band information supported by the communication device 110 may also include information indicating radio wave usage priority such as PAL and GAA.

Furthermore, the wireless interface information can also include modulation scheme information supported by the communication device 110. For example, as a representative example, information indicating a primary modulation scheme such as frequency shift keying (FSK), n-value phase shift keying (PSK, where n is a multiplier of two, such as two, four, eight, or the like), and n-value quadrature amplitude modulation (QAM, where n is a multiplier of four, such as four, 16, 64, 256, 1024) can be included. Furthermore, information indicating a secondary modulation scheme such as orthogonal frequency division multiplexing (OFDM), scalable OFDM, DFT spread OFDM (DFT-s-OFDM), generalized frequency division multiplexing (GFDM), and filter bank multi carrier (FBMC) can be included.

Furthermore, the wireless interface information can also include information regarding an error correction code.

For example, capabilities of a turbo code, a low density parity check (LDPC) code, a polar code, an erasure correction code, and the like, and coding rate information to be applied can be included.

The modulation scheme information and the information regarding the error correction code can also be expressed by a modulation and coding scheme (MCS) index as another aspect.

Furthermore, the wireless interface information can also include information indicating a function specific to each wireless technical specification supported by the communication device 110. For example, as a representative example, there is transmission mode (TM) information defined in LTE. In addition, those having two or more modes for a specific function can be included in the wireless interface information such as TM information. Furthermore, in the technical specification, in a case where the communication device 110 supports a function that is not essential in the specification even if there are not two or more modes, information indicating the supported function can also be included.

Furthermore, the wireless interface information can also include radio access technology (RAT) information supported by the communication device 110. For example, information indicating time division multiple access (TDMA), frequency division multiple access (FDMA), orthogonal frequency division multiple access (OFDMA), power division multiple access (PDMA), code division multiple access (CDMA), sparse code multiple access (SCMA), interleave division multiple access (IDMA), spatial division multiple access (SDMA), carrier sense multiple access/collision avoidance (CSMA/CA), carrier sense multiple access/collision detection (CSMA/CD), or the like can be included. Note that the TDMA, FDMA, and OFDMA are classified into orthogonal multiple access (OMA). The PDMA, CDMA, SCMA, IDMA, and SDMA are classified into non-orthogonal multiple access (NOMA). A representative example of the PDMA is a method implemented by a combination of superposition coding (SPC) and successive interference canceller (SIC). The CSMA/CA and CSMA/CD are classified into opportunistic access.

In a case where the wireless interface information includes information indicating the opportunistic access, information indicating details of the access method may be further included. As a specific example, information indicating which of frame based equipment (FBE) and load based equipment (LBE) defined in EN 301 598 of ETSI may be included.

In a case where the radio interface information indicates the LBE, the wireless interface information may further include LBE-specific information such as a priority class.

Furthermore, the wireless interface information can also include information regarding a duplex mode supported by the communication device 110. As a representative example, information regarding a method such as frequency division duplex (FDD), time division duplex (TDD), or full duplex (FD) can be included for example.

In a case where TDD is included as the wireless interface information, TDD frame structure information used or supported by the communication device 110 can be added. Furthermore, information related to the duplex mode may be included for each frequency band indicated by the frequency band information.

In a case where the FD is included as the wireless interface information, information regarding an interference power detection level may be included.

Furthermore, the wireless interface information can also include information regarding a transmission diversity method supported by the communication device 110. For example, space time coding (STC) or the like may be included.

Furthermore, the wireless interface information can also include guard band information. For example, information regarding a predetermined guard band size in the wireless interface can be included. Alternatively, for example, information regarding a guard band size desired by the communication device 110 may be included.

Regardless of the aspects described above, the wireless interface information may be provided for each frequency band.

The legal information is typically information regarding regulations that the communication device 110 has to comply with and defined by the radio administration agency or an equivalent agency in each country or region, authentication information acquired by the communication device 110, or the like. Typically, the information regarding the regulations can include, for example, upper limit value information of out-of-band radiation, information regarding a blocking characteristic of the receiver, and the like. Typically, the authentication information can include, for example, type approval information, legal regulation information serving as a reference of authentication acquisition, and the like. The type approval information corresponds to, for example, FCC ID in the United States, the technical standards conformity certification in Japan, and the like. The legal regulation information corresponds to, for example, FCC regulation numbers in the United States, ETSI Harmonized Standard number in Europe, and the like.

Among the legal information, regarding numerical values, those defined in the standard specification of wireless interface technology may be substituted. The standard specification of the wireless interface technology corresponds to, for example, 3GPP TS 36.104 or TS 38.104. An adjacent channel leakage ratio (ACLR) is defined therein. Instead of the upper limit information of the out-of-band radiation, the upper limit of the out-of-band radiation may be derived and used using the ACLR defined in the standard specification. Further, the ACLR itself may be used as necessary. Furthermore, adjacent channel selectivity (ACS) may be used instead of the blocking characteristic. Further, these may be used in combination, or an adjacent channel interference ratio (ACIR) may be used. Note that, in general, the ACIR has the following relationship with the ACLR and ACS.

[Math. 1]

$$ACIR = \left(\frac{1}{ACS} + \frac{1}{ACLR}\right)^{-1} \quad (1)$$

Note that although Expression (1) uses true value expression, Expression (1) may be expressed by logarithmic expression.

The installer information can include information capable of specifying a person who installs the communication device 110 (installer), unique information associated with the installer, and the like. Typically, the installer information can include information regarding a person who is responsible for the position information of the communication device 110, such as a certified professional installer (CPI) defined in Non Patent Document 2. The CPI discloses certified professional installer registration ID (CPIR-ID) and CPI name. Furthermore, as unique information associated with the CPI, for example, a contact address (mailing address or contact address), an e-mail address, a telephone number, a public key identifier (PKI), and the like are disclosed. It is not limited thereto, and other information related to the installer may be included in the installer information as necessary.

The group information can include information regarding the communication device group to which the communication device 110 belongs. Specifically, for example, information related to the same or equivalent type of group as disclosed in WINNF-SSC-0010 can be included. Furthermore, for example, in a case where the communication carrier manages the communication devices 110 in units of groups according to its own operation policy, information regarding the groups can be included in the group information.

The information listed so far may be estimated by the communication control device 130 from other information provided from the communication device 110 without the communication device 110 providing the information to the communication control device 130. Specifically, for example, the guard band information can be estimated from the wireless interface information. In a case where the wireless interface used by the communication device 110 is E-UTRA or 5G NR, it can be estimated on the basis of the transmission bandwidth specification of E-UTRA described in 3GPP TS 36.104, the transmission bandwidth specification of 5G NR described in 3GPP TS 38.104, and tables described in TS 38.104 illustrated below.

[Table 1]

| Table 5.6-1 Transmission bandwidth configuration NRB in E-UTRA channel bandwidths (cited from Table 5.6-1 of TS36.104 of 3GPP) | | | | | | |
|---|---|---|---|---|---|---|
| Channel bandwidth $BW_{Channel}$ [MHz] | 1.4 | 3 | 5 | 10 | 15 | 20 |
| Transmission bandwidth configuration $N_{RB}$ | 6 | 15 | 25 | 50 | 75 | 100 |

[Table 2]

Table 5.3.3-1: Minimum guardband (kHz) (FR1) (cited from Table 5.3.3-1 of TS38.104 of 3GPP)

| SCS (kHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
|---|---|---|---|---|---|---|---|---|---|---|---|---|---|
| 15 | 242.5 | 312.5 | 382.5 | 452.5 | 522.5 | 592.5 | 552.5 | 692.5 | N.A | N.A | N.A | N.A | N.A |
| 30 | 505 | 665 | 645 | 805 | 785 | 945 | 905 | 1045 | 825 | 965 | 925 | 885 | 845 |
| 60 | N. A | 1010 | 990 | 1330 | 1310 | 1290 | 1610 | 1570 | 1530 | 1490 | 1450 | 1410 | 1370 |

[Table 3]

| Table 5.3.3-2: Minimum guardband (kHz) (FR2) (cited from Table: 5.3.3-2 of TS38.104 of 3GPP) | | | | |
|---|---|---|---|---|
| SCS (kHz) | 50 MHz | 100 MHz | 200 MHz | 400 MHz |
| 60 | 1210 | 2450 | 4930 | N. A |
| 120 | 1900 | 2420 | 1900 | 9860 |

[Table 4]

| Table 5.3.3-3: Minimum guardband (kHz) of SCS 240 kHz SS/PBCH block (FR2) (cited from Table: 5.3.3-3 of TS38.104 of 3GPP) | | | |
|---|---|---|---|
| SCS (kHz) | 100 MHz ' | 200 MHz | 400 MHz ' |
| 240 | 3800 | 7720 | 15560 |

In other words, it is sufficient that the communication control device 130 can acquire the information listed so far, and the communication device 110 is not necessarily required to provide the information to the communication control device 130. Furthermore, the intermediate device 130B (for example, a network manager) that bundles the plurality of communication devices 110 does not need to provide the information to the communication control device 130A. Providing information by the communication device 110 or the intermediate device 130B to the communication control device 130 or 130A is merely one means of information provision in the present embodiment. The information listed so far means information that can be necessary for the communication control device 130 to normally complete this procedure, and means for providing the information does not matter. For example, in WINNF-TS-0061, such a method is called multi-step registration and allowed.

Furthermore, as a matter of course, the information listed so far is selectively applicable depending on the local legal system and technical specifications.

<2.1.1.1 Supplement of required parameters>

In the registration procedure, in some cases, it is assumed that the device parameters related to not only the communication device 110 but also the terminal 120 are required to be registered in the communication control device 130. In such a case, the term "communication device" in the description given in <2.1.1> may be replaced with a term "terminal" or a similar term. Furthermore, a parameter specific to "terminal" that is not described in <2.1.1> may also be handled as a required parameter in the registration procedure. For example, there is a user equipment (UE) category specified in 3GPP, and the like. <2.1.2 Details of registration processing>

As described above, the communication device 110) representing the wireless system that intends to use the frequency band generates a registration request including the device parameter and notifies the communication control device 130 of the registration request.

Here, in a case where the installer information is included in the device parameters, the communication device 110 may perform tamper-proof processing or the like on the registration request by using the installer information. Furthermore, a part or all of the information included in the registration request may be subjected to encryption processing. Specifically, for example, a unique public key may be shared in advance between the communication device 110 and the communication control device 130, and the communication device 110 may encrypt information using a secret key corresponding to the public key. Examples of the encryption target include security sensitive information such as position information.

Note that there may be cases where the ID and the position information of the communication device 110 are disclosed, and the communication control device 130 holds in advance the ID and the position information of the main communication device 110 existing in its coverage. In such a case, since the communication control device 130 can acquire the position information from the ID of the communication device 110 that has transmitted the registration request, the position information does not need to be included in the registration request. Furthermore, it is also conceivable that the communication control device 130 returns a necessary device parameter to the communication device 110 that has transmitted the registration request, and in response to this, the communication device 110 transmits a registration request including the device parameter necessary for registration. In this manner, the information included in the registration request may be different depending on the case.

After receiving the registration request, the communication control device 130 performs registration processing of the communication device 110 and returns a registration response according to a processing result. If there is no shortage or abnormality of information necessary for registration, the communication control device 130 records the information in an internal or external storage device and provides notification of normal completion. Otherwise, notification of a registration failure is provided. In a case where the registration is normally completed, the communication control device 130 may allocate an ID to each of the communication devices 110 and notify the communication devices of the ID information at the time of response. In a case where the registration fails, the communication device 110 may provide notification of the corrected registration request again. Furthermore, the communication device 110 may change the registration request and try the registration procedure until it is normally completed.

Note that the registration procedure may be executed even after the registration is normally completed. Specifically, for example, the registration procedure can be re-executed in a case where the position information is changed beyond a predetermined standard due to movement, accuracy improvement, or the like. The predetermined standard is typically determined by the legal system in each country or region. For example, in 47 C.F.R. Part 15 in the United States, a Mode II personal/portable white space device, that is, a device using a free spectrum is required to perform registration again in a case where its position changes by 100 meters or more.

<2.2 Available spectrum information query procedure (available spectrum query procedure)>

The available spectrum information query procedure is a procedure in which a wireless system that intends to use a frequency band inquires of the communication control device 130 for information regarding an available spectrum. Note that the available spectrum information query procedure does not necessarily need to be performed. Furthermore, the communication device 110 that makes an inquiry on behalf of the wireless system that intends to use the frequency band may be the same as or different from the communication device 110 that has generated the registration request. Typically, the communication device 110 that makes an inquiry notifies the communication control device 130 of a query request including information that can specify the communication device 110, and thereby the procedure is started.

Here, typically, the available spectrum information is information indicating a spectrum in which the communication device 110 can safely perform secondary use without giving fatal interference to the primary system.

The available spectrum information is determined, for example, on the basis of a secondary use prohibited area called an exclusion zone. Specifically, for example, in a case where the communication device 110 is installed in the secondary use prohibited area provided for the purpose of protecting the primary system using the frequency channel F1, the communication device 110 is not notified of the frequency channel F1 as an available channel.

The available spectrum information can also be determined, for example, by the degree of interference to the primary system. Specifically, for example, in a case where it is determined that the critical interference is given to the primary system even outside the secondary use prohibited area, the frequency channel may not be provided in notification as an available channel. An example of a specific calculation method is described in <2.2.2> described later.

Furthermore, as described above, there may be frequency channels that are not provided in notification as available due to conditions other than primary system protection requirements. Specifically, for example, in order to avoid interference that may occur between the communication devices 110 in advance, there may be cases where a frequency channel being used by another communication device 110 existing in the vicinity of the communication device 110 is not provided in notification as an available channel. In this manner, the available spectrum information set in consideration of interference with the other communication device 110 may be set as, for example, "use recommended frequency information" and provided together with the available spectrum information. That is, the "use recommended spectrum information" is desirably a subset of the available spectrum information.

Even in a case of affecting the primary system, if the influence can be avoided by reducing the transmission power, the same frequency as that of the primary system or the communication device 110 in the vicinity may be provided in notification as an available channel. In such a case, typically, maximum allowable transmission power information is included in the available spectrum information. The maximum allowable transmission power is typically expressed by EIRP. The present embodiment is not necessarily limited to this, and may be provided by, for example, a combination of antenna power (conducted power) and antenna gain. Moreover, the antenna gain may be set to an allowable peak gain for each spatial direction.

<2.2.1 Details of required parameters>

As the information that can specify the wireless system that intends to use the frequency band, for example, unique information registered at the time of the registration procedure, the above-described ID information, and the like can be assumed.

Furthermore, the query request can also include query requirement information. The query requirement information can include, for example, information indicating a frequency band for which it is desired to know whether or not it is available. Furthermore, for example, transmission power information can be included. The communication device 110 that makes an inquiry can include transmission power information, for example, in a case where it is desired to know only spectrum information in which it is likely that desired transmission power can be used. The query requirement information does not necessarily need to be included in the query request.

The information indicating the frequency band may also include information indicating a format of the available spectrum information. In the IEEE 802.11 standard, a channel number is defined for each band. For example, a flag for requesting availability of a channel defined in such wireless interface technical specification may be included. As another form, a flag for requesting availability of a unit spectrum range instead of a specified channel may be included. In a case where the unit spectrum is 1 MHz, available spectrum information is requested for each frequency range of 1 MHz. In a case where this flag is used, the desired unit spectrum information may be enclosed in the flag.

Furthermore, the query request can also include a measurement report. The measurement report includes a result of measurement performed by the communication device 110 and/or the terminal 120. Some or all of the measurement results may be represented by raw data or may be represented by processed data. For example, standardized metrics represented by reference signal received power (RSRP), reference signal strength indicator (RSSI), and reference signal received quality (RSRQ) can be used for measurement.

<2.2.2 Details of available spectrum evaluation processing>

After receiving the query request, the available spectrum is evaluated on the basis of the query requirement information. For example, as described above, the available spectrum can be evaluated in consideration of existence of the primary system, the secondary use prohibited area thereof, and the communication device 110 in the vicinity.

The communication control device may derive the secondary use prohibited area. For example, in a case where the maximum transmission power $P_{MaxTx(dBm)}$ and the minimum transmission power $P_{MinTx(dBm)}$ are defined, it is possible to calculate the range of the separation distance between the primary system and the secondary system from the following expression and determine the secondary use prohibited area.

[Math. 2]

$$PL^{-1}\left(P_{MaxTx(dBm)} - I_{Th(dBm)}\right)_{(dB)} \leq d < PL^{-1}\left(P_{MinTx(dBm)} - I_{Th(dBm)}\right)_{(dB)}$$

$I_{Th(dBm)}$ is an allowable interference power (a limit value of the allowable interference power), d is a distance between a predetermined reference point (Reference Point) and the communications device 110, and $PL()_{(dB)}$ is a function of a propagation loss. Thus, the frequency availability can be determined according to the positional relationship between the primary system and the communication device 110. In addition, in a case where transmission power information or power range information desired to be used by the communication device 110 is supplied in a request, the frequency availability can be determined by calculating $PL^{-1}(P_{Tx(dBm)}-I_{Th(dBm)})$ and comparing with the range expression.

The maximum allowable transmission power information may be derived. Typically, the maximum allowable transmission power information is calculated by using allowable interference power information in the primary system or a protection zone thereof, position information of a reference point for calculating an interference power level suffered by the primary system, registration information of the communication device 110, and a propagation loss estimation model. Specifically, as an example, it is calculated by the following mathematical expression.

[Math. 3]

$$P_{MaxTx(dBm)} = I_{Th(dBm)} + PL(d)_{(dB)} \qquad (2)$$

In Expression (2), the antenna gain in a transceiver is not included, but the antenna gain in the transceiver may be included according to the maximum allowable transmission power expression method (EIRP, conducted power, and the like) or the reception power reference point (antenna input point, antenna output point, and the like). Further, a safety margin or the like for compensating for variation due to fading may be included. Furthermore, feeder loss may be considered as necessary. In addition, it is possible to similarly calculate a neighboring channel by adding an Adjacent channel leakage ratio (ACRL) and an out-of-band radiation maximum value.

Furthermore, Expression (2) is described on the basis of the assumption that a single communication device 110 is an interference source (single station interference). For example, in a case where it is necessary to consider aggregated interference from a plurality of communication devices 110 at the same time, a correction value may be added. Specifically, for example, the correction value can be determined on the basis of three (fixed/predetermined, flexible, flexible minimized) interference margin distribution methods disclosed in Non Patent Document 3 (ECC Report 186).

Note that the allowable interference power information itself is not necessarily directly available as in Expression (2). For example, in a case where a required signal power-to-interference power ratio (SIR) of the primary system, a signal to interference plus noise ratio (SINR), and the like are available, they may be converted into allowable interference power and used. Note that such conversion processing is not limited to this processing, and may be applied to processing of other procedures.

Note that although Expression (2) is expressed using logarithms, as a matter of course, it may be used by converting into true numbers at the time of implementation. Furthermore, all parameters in logarithmic notation described in the present disclosure may be used by appropriately converting into true numbers.

Furthermore, in a case where the above-described transmission power information is included in the query requirement information, the available spectrum can be evaluated by a method different from the above-described method. Specifically, for example, in a case where it is assumed that desired transmission power indicated by transmission power information is used, when an estimated interference quantity is less than allowable interference power in the primary system or a protection zone thereof, it is determined that the frequency channel is available, and the communication device 110 is notified of the frequency channel.

Furthermore, for example, in a case where an area or a space in which the communication device 110 can use the frequency band is determined in advance as in an area of a radio environment map (REM), the available spectrum information may be simply derived on the basis of only coordinates (coordinates or latitude, longitude, and ground level of x-axis, y-axis, and z-axis of communication device 110) included in the position information of the communication device 110. Furthermore, for example, even in a case where a lookup table that associates coordinates of a position of the communication device 110 with available spectrum information is prepared, the available spectrum information described above may be derived on the basis of only the position information of the communication device 110. As described above, there are various methods for the method of determining the available spectrum, and it is not limited to the example of the present disclosure.

Furthermore, in a case where the communication control device 130 acquires information regarding capability of a band extension technology such as carrier aggregation (CA) or channel bonding as the frequency band information supported by the communication device 110, the communication control device 130 may include an available combination, a recommended combination, or the like thereof in the available spectrum information.

Furthermore, in a case where the communication control device 130 acquires information regarding a combination of frequency bands supported by the dual connectivity and the multi connectivity as the frequency band information supported by the communication device 110, the communication control device 130 may include information such as an available spectrum and a recommended spectrum in the available spectrum information for the dual connectivity and the multi connectivity.

Furthermore, in a case of providing the available spectrum information for the band extension technology as described above, when the imbalance of the maximum allowable transmission power occurs between the plurality of frequency channels, the available spectrum information may be provided after adjusting the maximum allowable transmission power of each frequency channel. For example, from a perspective of primary system protection, the maximum allowable transmission power of each frequency channel may be aligned with the maximum allowable transmission power of a frequency channel having a low maximum allowable power flux density (power spectral density (PSD)).

The evaluation of the available spectrum does not necessarily need to be performed after the query request is received. For example, after normal completion of the above-described registration procedure, the communication control device 130 may independently perform the procedure without a query request. In such a case, an REM, a lookup table, or an information table similar to those described above as an example may be created.

Furthermore, the radio wave use priority such as PAL or GAA may also be evaluated. For example, in a case where the registered device parameter or the query requirement includes information regarding the priority of radio wave use, it may be determined whether spectrum use is possible on the basis of the priority, and the notification may be made. Furthermore, for example, as disclosed in Non Patent Document 2, in a case where information (In Non Patent Document 2, it is referred to as a cluster list) regarding the communication device 110 that performs high priority use (for example, PAL) from the user is registered in the communication control device 130 in advance, evaluation may be performed on the basis of the information.

After the evaluation of the available spectrum is completed, the communication control device 130 notifies the communication device 110 of the evaluation result.

The communication device 110 may select a desired communication parameter by using the evaluation result received from the communication control device 130. In a case where a spectrum grant procedure (to be described later) is not employed, the communication device 110 may start radio wave transmission using the selected desired communication parameter as a communication parameter.

<2.3 Spectrum grant procedure>

The spectrum grant procedure is a procedure for the wireless system that intends to use the frequency band to receive the secondary use permission of the spectrum from the communication control device 130. The communication device 110 that performs the spectrum grant procedure as a representative of the wireless system may be the same as or different from the communication device 110 that has performed the procedure so far. Typically, the communication device 110 notifies the communication control device 130 of a spectrum use permission request including information that can specify the communication device 110, thereby starting the procedure. Note that, as described above, the available spectrum information query procedure is not essential. Therefore, the spectrum grant procedure may be performed next to the available spectrum information query procedure, or may be performed next to a registration procedure.

In the present embodiment, it is assumed that at least the following two types of spectrum use permission request methods can be used.

· Designation method
· Flexible method

The designation method is a request method in which the communication device 110 designates a desired communication parameter and requests the communication control device 130 to permit operation based on the desired communication parameter. The desired communication parameter includes, but is not particularly limited to, a frequency channel to be used, a maximum transmission power, and the like. For example, a wireless interface technology specific parameter (such as a modulation scheme or a duplex mode) may be designated. Furthermore, information indicating radio wave use priority such as PAL and GAA may be included.

The flexible method is a request method in which the communication device 110 designates only a requirement regarding a communication parameter and requests the communication control device 130 to designate a communication parameter that can be permitted for secondary use while satisfying the requirement. Examples of the requirement related to the communication parameter include, but are not particularly limited to, a bandwidth, a desired maximum transmission power, or a desired minimum transmission power, and the like. For example, a wireless interface technology specific parameter (such as a modulation scheme or a duplex mode) may be designated. Specifically, for example, one or more TDD frame structures may be selected in advance and provided in notification.

Similarly to the query request, the spectrum use permission request may also include the measurement report in either the designation method or the flexible method. The measurement report includes a result of measurement performed by the communication device 110 and/or the terminal 120. The measurement may be represented by raw data or processed data. For example, standardized metrics represented by reference signal received power (RSRP), reference signal strength indicator (RSSI), and reference signal received quality (RSRQ) can be used for measurement.

Note that the scheme information used by the communication device 110 may be registered in the communication control device 130 at the time of the registration procedure described in <2.1>.

<2.3.1 Details of spectrum use permission processing>

After receiving the spectrum use permission request, the communication control device 130 performs spectrum use permission processing on the basis of the spectrum use permission request method. For example, using the method described in <2.2>, it is possible to perform the spectrum use permission processing in consideration of the primary system, the secondary use prohibited area, the presence of the communication device 110 in the vicinity, and the like.

In a case where the flexible method is used, the maximum allowable transmission power information may be derived using the method described in <2.2.2>. Typically, the maximum allowable transmission power information is calculated by using allowable interference power information in the primary system or a protection zone thereof, position information of a reference point for calculating an interference power level suffered by the primary system, registration information of the communication device 110, and a propagation loss estimation model. Specifically, as an example, it is calculated by the above Expression (2).

Furthermore, as described above, Expression (2) is described on the basis of the assumption that the single communication device 110 is an interference source. For example, in a case where it is necessary to consider aggregated interference from a plurality of communication devices 110 at the same time, a correction value may be added. Specifically, for example, the correction value can be determined on the basis of three types of methods (Fixed/Predetermined, Flexible, Flexible Minimized) disclosed in Non Patent Document 3 (ECC Report 186).

The communication control device 130 can use various propagation loss estimation models in a spectrum grant procedure, available spectrum evaluation processing for an available spectrum information query request, and the like. In a case where a model is designated for each application, it is desirable to use the designated model. For example, in Non Patent Document 2 (WINNF-TS-0112), a propagation loss model such as Extended Hata (eHATA) or Irregular Terrain Model (ITM) is employed for each application. Of course, the propagation loss model is not limited thereto.

There are also propagation loss estimation models that require information regarding radio wave propagation paths. The information regarding the radio wave propagation path can include, for example, information indicating inside and outside of a line of sight (Line of Sight (LOS) and/or Non Line of Sight (NLOS)), topographical information (undulations, sea levels, and the like), environmental information (Urban, Suburban, Rural, Open Sky, and the like), and the like. When using the propagation loss estimation model, the communication control device 130 may estimate these pieces of information from the registration information of the communication device 110 or the information of the primary system that is already acquired. Alternatively, in a case where there is a parameter designated in advance, it is desirable to use the parameter.

In a case where the propagation loss estimation model is not designated in a predetermined application, the propagation loss estimation model may be selectively used as necessary. For example, when estimating the interference power to the other communication device 110, a model that is calculated with a small loss such as a free space loss model is used, but when estimating the coverage of the communication device 110, a model that is calculated with a large loss can be used.

Furthermore, in a case where the designated propagation loss estimation model is used, as an example, the spectrum use permission processing can be performed by evaluating an interference risk. Specifically, for example, in a case where it is assumed that desired transmission power indicated by transmission power information is used, when an estimated interference quantity is less than the allowable interference power in the primary system or a protection zone thereof, it is determined that use of the frequency channel can be permitted, and the communication device 110 is notified of the determination.

In any method of the designation method and the flexible method, similarly to the query request, the radio wave usage priority such as PAL or GAA may also be evaluated. For example, in a case where the registered device parameter or the query requirement includes information regarding the radio wave usage priority, it may be determined whether the spectrum use is possible on the basis of the priority, and the notification may be made. Furthermore, for example, in a case where information regarding the communication device 110 that performs high priority use (for example, PAL) from the user is registered in the communication control device 130 in advance, evaluation may be performed on the basis of the information. For example, in Non Patent Document 2 (WINNF-TS-0112), information regarding the communication device 110 is referred to as a cluster list.

In addition, in any of the above calculations, when the position information of the communication device is used, the frequency availability may be determined by performing correction of the position information and the coverage by using the positioning accuracy information (location uncertainty).

The spectrum use permission processing is not necessarily performed due to reception of the spectrum use permission request. For example, after the normal completion of the above-described registration procedure, the communication control device 130 may independently perform without the spectrum use permission request. Furthermore, for example, the spectrum use permission processing may be performed at regular intervals. In such a case, the above-described REM, lookup table, or an information table similar thereto may be created. Thus, the spectrum that can be permitted is determined only by the position information, and thus the communication control device 130 can quickly return a response after receiving the spectrum use permission request.

<2.4 Spectrum use notification (spectrum use notification/heartbeat)>

The spectrum use notification is a procedure in which the wireless system using the frequency band notifies the communication control device 130 of the use of the spectrum based on the communication parameter allowed to be used in the spectrum grant procedure. The communication device 110 that performs the spectrum use notification as a representative of the wireless system may be the same as or different from the communication device 110 that has performed the procedure so far. Typically, the communication device 110 notifies the communication control device 130 of a notification message including information that can specify the communication device 110.

The spectrum use notification is desirably performed periodically until the use of the spectrum is rejected from the communication control device 130. In that case, the spectrum use notification is also referred to as a heartbeat.

After receiving the spectrum use notification, the communication control device 130 may determine whether to start or continue the spectrum use (in other words, radio wave transmission at the permitted spectrum). Examples of the determination method include confirmation of the spectrum use information of the primary system. Specifically, it is possible to determine permission or rejection of start or continuation of spectrum use (radio wave transmission at the permitted spectrum) on the basis of a change in the use spectrum of the primary system, a change in the spectrum use status of the primary system in which the radio wave usage is not steady (for example, a ship radar of CBRS in the United States), and the like. If the start or continuation is permitted, the communication device 110 may start or continue the spectrum use (radio wave transmission at the permitted spectrum).

After receiving the spectrum use notification, the communication control device 130 may command reconfiguration of the communication parameters to the communication device 110. Typically, in a response of the communication control device 130 to the spectrum use notification, reconfiguration of the communication parameters can be commanded. For example, information regarding recommended communication parameters (hereinafter, recommended communication parameter information) can be provided. The communication device 110 to which the recommended communication parameter information has been provided desirably performs the spectrum grant procedure described in <2.4> again using the recommended communication parameter information.

<2.5 Supplement of various procedures>

The procedures described above do not necessarily need to be implemented individually, as described below. For example, by substituting a third procedure including two different procedures, the two different procedures may be implemented. Specifically, for example, the registration request and the available spectrum information query request may be integrally provided in notification. Furthermore, for example, the spectrum grant procedure and the spectrum use notification may be integrally performed. As a matter of course, it is not limited to these combinations, and three or more procedures may be performed integrally. Furthermore, as described above, one procedure may be separately performed a plurality of times.

Furthermore, the expression "to acquire" or an expression equivalent thereto in the present disclosure does not necessarily mean to acquire according to the procedure described in the present disclosure. For example, although it is described that the position information of the communication device 110 is used in the available spectrum evaluation processing, it means that the information acquired in the registration procedure does not necessarily need to be used, and in a case where the position information is included in an available spectrum query procedure request, the position information may be used. In other words, the procedure for acquisition described in the present disclosure is an example, and acquisition by other procedures is also permitted within the scope of the present disclosure and within the scope of technical feasibility.

Furthermore, the information described to be included in a response from the communication control device 130 to the communication device 110 may be actively provided in notification from the communication control device 130 by a push method if possible. As a specific example, the available spectrum information, the recommended communication parameter information, a radio wave transmission continuation rejection notification, and the like may be provided in notification by the push method.

<2.6 Various procedures for terminal>

So far, the description has been made mainly assuming the processing in the communication device 110A. However, in some embodiments, not only the communication device 110A but also the terminal 120 and the communication device 110B can operate under management of the communication control device 130. That is, a scenario in which the communication parameter is determined by the communication control device 130 is assumed. Even in such a case, basically, each procedure described in <2.1> to <2.4> can be used. However, unlike the communication device 110A, the terminal 120 and the communication device 110B need to use the spectrum managed by the communication control device 130 for the backhaul link, and cannot perform radio wave transmission without permission. Therefore, it is desirable to start backhaul communication for the purpose of accessing the communication control device 130 only after detecting a radio wave or an authorization signal transmitted by the communication device 110A (communication device 110 capable of providing wireless communication service or master communication device 110 of master-secondary type).

On the other hand, under the management of the communication control device 130, there may be cases where, also in the terminal or the communication device 110B, an allowable communication parameter is set for the purpose of protecting the primary system. However, the communication control device 130 cannot know the position information and the like of these devices in advance. Furthermore, these devices are also likely to have mobility. That is, the position information is dynamically updated. Depending on the laws, in a case where the position information changes by a certain amount or more, re-registration to the communication control device 130 may be required in some cases.

In consideration of such various use forms, operation forms, and the like of the terminal 120 and the communication device 110, in the operation form of the TVWS (Non Patent Document 4) defined by the Office of Communications (Ofcom), the following two types of communication parameters are defined.

· Generic operational parameters
· Specific operational parameters

The generic operational parameters are communication parameters defined as "parameters that can be used by any slave WSD located within the coverage area of a predetermined master WSD (corresponding to the communication device 110)" in Non Patent Document 4. A feature is that it is calculated by the WSDB without using the position information of the slave WSD.

The generic operational parameters can be provided by unicast or broadcast from the communication device 110 that is already permitted to perform radio wave transmission from the communication control device 130. For example, a broadcast signal represented by a contact verification signal (CVS) specified in Part 15 Subpart H of the FCC rule in the United States can be used. Alternatively, it may be provided by a broadcast signal specific to a wireless interface. Thus, the terminal 120 and the communication device 110B can be handled as the communication parameters used for radio wave transmission for the purpose of accessing the communication control device 130.

The specific operational parameters are communication parameters defined as "parameters usable by a specific slave white space device (WSD)" in Non Patent Document 4. In other words, they are communication parameters calculated using the device parameter of the slave WSD corresponding to the terminal 120. A feature is that it is calculated by the white space database (WSDB) using the position information of the slave WSD.

The CPE-CBSD Handshake Procedure defined in Non Patent Document 5 can be regarded as another form of the procedure related to the terminal. The CPE-CBSD does not have a wired backhaul line and accesses the Internet via the BTS-CBSD. Therefore, permission for radio wave transmission in the CBRS band cannot be acquired from a SAS without a special regulation or procedure. The CPE-CBSD Handshake Procedure allows the CPE-CBSD to perform radio wave transmission at the same maximum EIRP and the minimum necessary Duty Cycle as those of a terminal (EUD) until permission for radio wave transmission is acquired from the SAS. Accordingly, the communication device 110B can construct a line for acquiring permission for radio wave transmission from the communication control device 130 by setting the transmission EIRP to the maximum EIRP of the terminal and then performing wireless communication with the communication device 110A at the minimum necessary duty cycle. After the permission for the radio wave transmission is acquired, it is possible to use up to the maximum EIRP defined by the communication device within the range of the permission.

<2.7 Procedure occurring between communication control devices>

<2.7.1 Information exchange>

The communication control device 130 can exchange management information with another communication control device 130. At least the following information is desirably exchanged.

- · Information related to communication device 110
- · Area information
- · Protection target system information

The information related to the communication device 110 includes at least the registration information and the communication parameter information of the communication device 110 operating under permission of the communication control device 130. The registration information of the communication device 110 having no permitted communication parameter may be included.

The registration information of the communication device 110 is typically a device parameter of the communication control device 130 registered in the communication device 110 in the above-described registration procedure. Not all of the registered information is necessarily exchanged. For example, information that may correspond to personal information does not need to be exchanged. Furthermore, when the registration information of the communication device 110 is exchanged, the registration information may be encrypted and exchanged, or the information may be exchanged after the content of the registration information is made ambiguous. For example, information converted into a binary value or information signed using an electronic signature mechanism may be exchanged.

The communication parameter information of the communication device 110 is typically information related to the communication parameters currently used by the communication device 110. At least information indicating the use spectrum and the transmission power is desirably included. Other communication parameters may be included.

The area information is typically information indicating a predetermined geographical region. This information can include region information of various attributes in various modes.

For example, as in a PAL protection area (PPA) disclosed in Non Patent Document 2 (WINNF-TS-0112), protection zone information of the communication device 110 serving as a high priority secondary system may be included in the area information. The area information in this case can be expressed by, for example, a set of three or more coordinates indicating the geographical position. Furthermore, for example, in a case where a plurality of communication control devices 130 can refer to a common external database, the area information is expressed by a unique ID, and the actual geographical region can be referred to from the external database using the ID.

Furthermore, for example, information indicating the coverage of the communication device 110 may be included. The area information in this case can also be expressed by, for example, a set of three or more coordinates indicating the geographical position. Further, for example, assuming that the coverage is a circle centered on the geographical position of the communication device 110, the coverage can also be expressed by information indicating the size of the radius. Furthermore, for example, in a case where a plurality of communication control devices 130 can refer to the common external database that records area information, the information indicating the coverage is expressed by a unique ID, and the actual coverage can be referred to from the external database using the ID.

Furthermore, as another aspect, information related to an area section determined in advance by an administration or the like can also be included. Specifically, for example, it is possible to indicate a certain region by indicating an address. Furthermore, for example, a license area or the like can be similarly expressed.

Furthermore, as still another aspect, the area information does not necessarily express a planar area, and may express a three-dimensional space. For example, it may be expressed using a spatial coordinate system. Furthermore, for example, information indicating a predetermined closed space such as a floor number, a floor, and a room number of a building may be used.

The protection target system information is, for example, information of a wireless system treated as a protection target, such as the aforementioned existing layer (incumbent tier). Examples of the situation in which this information needs to be exchanged include a situation in which cross-border coordination is required. It is well conceivable that different objects to be protected exist in the same band between neighboring countries or regions. In such a case, the protection target system information can be exchanged between different communication control devices 130 in different countries or regions to which the communication control devices belong as necessary.

As another aspect, the protection target system information may include information of a secondary licensee and information of the wireless system operated by the secondary licensee. The secondary licensee is specifically a lessee of the license, and for example, it is assumed that the secondary licensee borrows PAL from the holder and operates the wireless system owned by itself. In a case where the communication control device 130 performs the rent management independently, information of the secondary licensee and information of the wireless system operated by the secondary licensee can be exchanged with another communication control device for the purpose of protection.

These pieces of information can be exchanged between the communication control devices 130 regardless of the decision-making topology applied to the communication control device 130.

Furthermore, these pieces of information can be exchanged in various manners. An example thereof will be described below. - ID designation method

· Period designation method
· Region designation method
· Dump method

The ID designation method is a method of acquiring information corresponding to an ID given in advance to specify information managed by the communication control device 130. For example, it is assumed that the first communication control device 130 manages the communication device 110 with ID: AAA. At this time, the second communication control device 130 designates the ID: AAA to the first communication control device 130 and makes an information acquisition request. After receiving the request, the first communication control device 130 searches for information of ID: AAA, and provides notification of information regarding the communication device 110 of ID: AAA, for example, registration information communication parameter information, and the like in response.

The period designation method is a method in which information satisfying a predetermined condition can be exchanged in a designated specific period.

Examples of the predetermined condition include the presence or absence of information update. For example, in a case where acquisition of information regarding the communication device 110 in the specific period is designated by a request, the registration information of the communication device 110 newly registered within the specific period can be provided in notification in response. Furthermore, the registration information or the information of communication parameters of the communication device 110 whose communication parameter has been changed within the specific period can also be provided in notification in response.

Examples of the predetermined condition include whether the predetermined condition is recorded by the communication control device 130. For example, in a case where acquisition of information regarding the communication device 110 in the specific period is designated in the request, the registration information or the information of the communication parameters recorded by the communication control device 130 in the period can be provided in notification in response. In a case where the information is updated in the period, the latest information in the period can be provided in notification. Alternatively, an update history may be provided in notification for each piece of information.

In the region designation method, a specific region is designated, and information of the communication device 110 belonging to the region is exchanged. For example, in a case where acquisition of information regarding the communication device 110 in the specific region is designated by a request, the registration information or the information of the communication parameters of the communication device 110 installed in the region can be provided in notification by a response.

The dump method is a method of providing all information recorded by the communication control device 130. At least information and area information related to the communication device 110 are desirably provided by the dump method.

The above description of the information exchange between the communication control devices 130 is based on a pull method. That is, it is a form in which information corresponding to the parameter designated in the request is responded, and can be implemented by the HTTP GET method as an example. However, it is not limited to the pull method, and information may be actively provided to another communication control device 130 by the push method. As an example, the push manner can be implemented by the HTTP POST method.

<2.7.2 Command or request procedure>

The communication control device 130 may execute a command or a request with each other. Specifically, as an example, there is reconfiguration of communication parameters of the communication device 110. For example, in a case where it is determined that the first communication device 110 managed by the first communication control device 130 is greatly interfered with by the second communication device 110 managed by the second communication control device 130, the first communication control device 130 may request the second communication control device 130 to change the communication parameter of the second communication device 110.

As another example, there is reconfiguration of the area information. For example, in a case where calculation of coverage information and protection zone information regarding the second communication control device 130 managed by the second communication device 110 is incomplete, the first communication control device 130 may request the second communication control device 130 to reconfigure the area information. Besides this, the area information reconfiguration request may be made for various reasons.

<2.8 Information transmission means>

A notification (signaling) between entities described above can be implemented via various media. E-UTRA or 5G NR will be described as an example. As a matter of course, it is not limited thereto when implementing.

<2.8.2 Signaling between communication control device 130 and communication device 110>

The notification from the communication device 110 to the communication control device 130 may be performed, for example, in an application layer. For example, the Hyper Text Transfer Protocol (HTTP) may be used. Signaling can be performed by describing required parameters in the message body of the HTTP according to a predetermined manner. Moreover, in the case of using the HTTP, notification from the communication control device 130 to the communication device 110 is also performed according to the HTTP response mechanism.

<2.8.3 Signaling between communication device 110 and terminal 120>

The notification from the communication device 110 to the terminal 120 may be performed using, for example, at least one of radio resource control (RRC) signaling, system information (SI), or downlink control information (DCI). Furthermore, examples of the downlink physical channel include a physical downlink control channel (PDCCH), a physical downlink shared channel (PDSCH), a physical broadcast channel (PBCH), an NR-PDCCH, an NR-PDSCH, an NR-PBCH, and the like, but the downlink physical channel may be implemented using at least one of these.

The notification from the terminal 120 to the communication device 110 may be performed using, for example, radio resource control (RRC) signaling or uplink control information (UCI). Furthermore, it may be implemented by using an uplink physical channel (physical uplink control channel (PUCCH), physical uplink shared channel (PUSCH), physical random access channel (PRACH)).

The signaling is not limited to the physical layer signaling described above, and the signaling may be performed at a higher layer. For example, at the time of implementation at the application layer, signaling may be implemented by describing a required parameter in a message body of the HTTP according to a predetermined manner.

<2.8.4 Signaling between terminals 120>

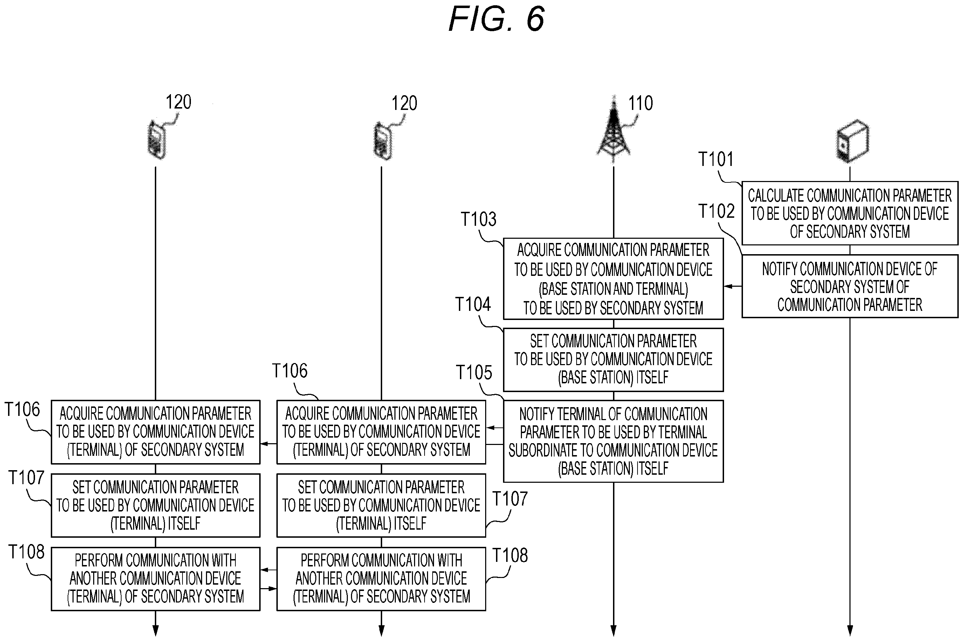

Fig. 6 illustrates an example of a flow of signaling in a case where device-to-device (D2D) or vehicle-to-everything (V2X), which is communication between the terminals 120, is assumed as communication of the secondary system. The D2D or V2X which is communication between the terminals 120 may be performed using a physical sidelink channel (physical sidelink control channel (PSCCH), physical sidelink shared channel (PSSCH), physical sidelink broadcast channel (PSBCH)). The communication control device 130 calculates a communication parameter to be used by the secondary system (T101) and notifies the communication device 110 of the secondary system of the calculated communication parameter (T102). A value of the communication parameter may be determined and provided in notification, or a condition indicating a range or the like of the communication parameter may be determined and provided in notification. The communication device 110 acquires a communication parameter to be used by the secondary system (T103), and sets the communication parameter to be used by the communication device 110 itself (T104).

Then, the terminal 120 is notified of a communication parameter to be used by the terminal 120 subordinate to the communication device 110 (T105). Each terminal 120 subordinate to the communication device 110 acquires (T106) and sets (T107) the communication parameter to be used by the terminal 120. Then, communication with another terminal 120 of the secondary system is performed (T108).

The communication parameter in a case where the target frequency channel for spectrum sharing is used in the sidelink (direct communication between the terminals 120) may be provided in notification, acquired, or set in a form associated with a resource pool for sidelink in the target frequency channel. The resource pool is a radio resource for a sidelink set by a specific frequency resource or time resource. Examples of the frequency resource include a resource block, a component carrier, and the like. The time resource includes, for example, a radio frame, a subframe, a slot, a mini-slot, and the like. In a case where the resource pool is set in a frequency channel to be subjected to spectrum sharing, the resource pool is set in the terminal 120 by the communication device 110 on the basis of at least one of the RRC signaling, the system information, or the downlink control information. Then, the communication parameters to be applied in the resource pool and the sidelink are also set in the terminal 120 by the communication device 110 on the basis of at least one of the RRC signaling, the system information, or the downlink control information from the communication device 110 to the terminal 120. The notification of setting of the resource pool and the notification of the communication parameter to be used in the sidelink may be performed simultaneously or individually.

<<3. Embodiments of present invention>>

<Conventional PPA (PAL (priority access license) protection area) calculation method>

Conventionally, PPA is calculated on the basis of the method defined in requirement R2-PAL-02 defined in WINNF-TS-0112. PPA is a region (area) for protecting PAL users from interference from GAA (General Authorized Access).

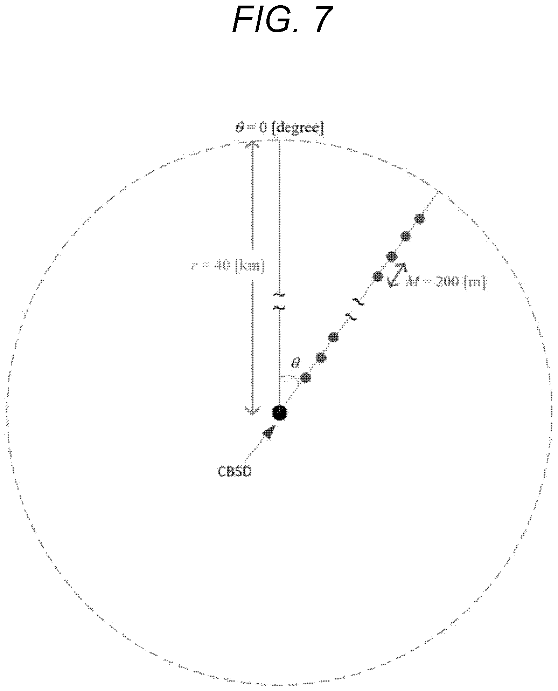

Hereinafter, a method for calculating PPA defined by R2-PAL-02 will be described. The following is an excerpt from the requirement R2-PAL-02 (Japanese in parentheses is translated into Japanese). Fig. 7 is a supplementary diagram describing a method of calculating PPA.

R2-PAL-02: PAL Protection Contour Methodology: PAL Protection Contour shall be determined by a SAS in a manner that yields substantially similar results as generated by the following methodology ("PAL protection contour" shall be determined by a SAS in a manner that yields substantially similar results as generated by the following methodology) : a For a particular CBSD in a PPA cluster list, SAS shall define 360 radials where each radial corresponds to the line extending out to 40 km from the CBSD location with heading defined relative to due north by angles, $\theta = 0$, 1, ..., 359 degrees. (For a particular CBSD in a PPA cluster list, SAS shall define 360 radial straight lines where each radial straight line corresponds to the line extending out to 40 km from the CBSD position with heading defined relative to due north by angles, $\theta = 0$, 1, ..., 359 degrees.)

b SAS shall estimate the received power of the signal from the CBSD in accordance with R2-SGN-04 and R2-SGN-20 at regularly spaced points along each radial where the regular spacing "M" of the points shall be 200 meters for Initial Certification. (SAS shall estimate the received power of the signal from the CBSD in accordance with R2-SGN-04 and R2-SGN-20 at regularly spaced points along each radial straight line. Here, the regular spacing M of the points shall be 200 [m] for Initial Certification.)

c SAS shall determine N(i) for all radials ($0 \leq i \leq 359$), which is the number of points along the i-th radial with median signal strength equal to or greater than -96 dBm/10 MHz. (SAS shall determine the number of points N(i) for all radial straight lines ($0 \leq i \leq 359$) with median signal strength equal to or greater than -96 [dBm/10 MHz].)

d SAS shall generate a first contour, C($\theta$), which is comprised of 360 vertex points where the i-th vertex point is the point at distance $M \times N(i)$ along the i-th radial. (SAS shall generate a first contour C($\theta$) constituted by 360 vertex points where the i-th vertex point is the point at distance $M \times N(i)$ along the i-th radial straight line)

e The PAL Coverage Contour S($\theta$) shall be generated by smoothing C($\theta$) using a Hamming filter of size 15. (It is assumed that the "PAL protection contour" is generated by smoothing C($\theta$) using a Hamming filter of size 15.)

f SAS shall compute contours, S($\theta$), for each CBSD in the PPA cluster list. Subsequently, SAS shall determine the union of the coverage contours for all CBSDs within the PPA cluster list. This union is denoted the "PAL Coverage Contour". (SAS shall calculate contours S($\theta$) for each CBSD in the PPA cluster list. Subsequently, SAS shall determine the union of the coverage contours for all CBSDs within the PPA cluster list. This union is denoted the "PAL protection contour".)

<3.1 First embodiment>

In a first embodiment, when a SAS (spectrum access system) constructs a PPA as a region in which a plurality of CBSDs is protected from external interference on the basis of a PAL owned by a PAL holder, construction of a PPA having high interference resistance is achieved even in a case where each Citizens Broadband Radio Service Device (CBSD) has a configuration in which a beam can be dynamically changed by dynamic beamforming.

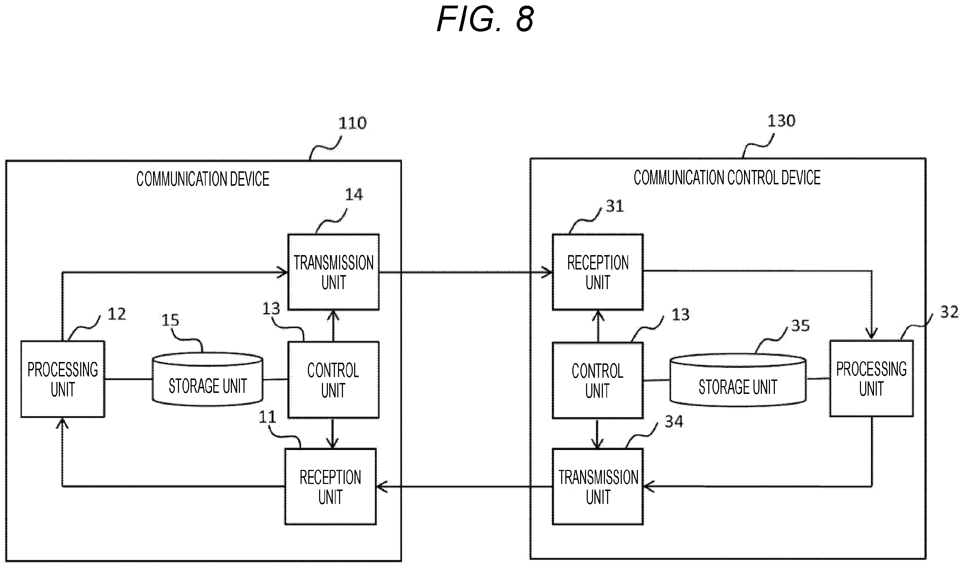

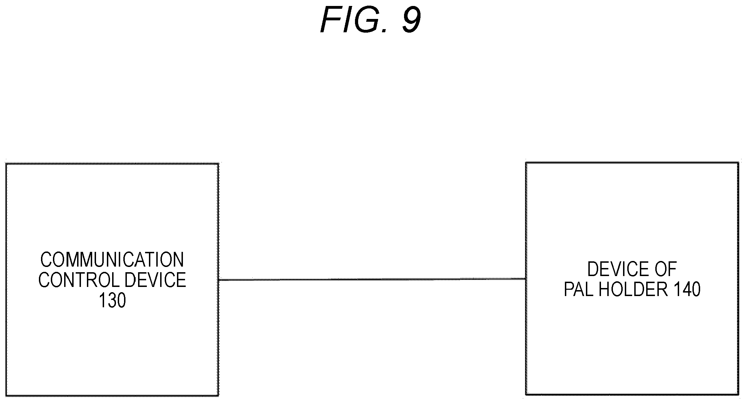

Fig. 8 is a block diagram of a communication system according to the first embodiment. The communication system in Fig. 8 includes one or more CBSDs (communication devices) 110 and the SAS (communication control device) 130. Fig. 9 illustrates the device 140 of the PAL holder connected to the communication control device 130. The device 140 may be a part of the communications system in Fig. 8.

The communication control device 130 includes a reception unit 31, a processing unit 32, a control unit 33, a transmission unit 34, and a storage unit 35. The transmission unit 34 performs processing of transmitting a signal wirelessly or by wire with the communication device 110, another communication control device, and the device 140. The reception unit 31 performs processing of receiving a signal from the communication device 110, another communication control device, and the device 140 wirelessly or by wire. The control unit 33 controls the entire communication control device 130 by controlling each element in the communication control device 130. The processing unit 32 performs various processes (for example, a process related to various procedures such as a registration procedure of CBSD, and a process of forming PPA) according to the present embodiment.

The storage unit 35 of the communication control device 130 stores in advance various types of information necessary for communication with the communication device 110, other communication control devices, and the device 140. As an example, the storage unit 35 stores registration information which is information of the registered communication device 110. The registration information includes, for example, an ID, position information, maximum transmission power information (EIRP capability value, maximum antenna power (maximum conducted power), and the like), dynamic beam pattern information, and the like of the communication device 110 to be described later. Furthermore, an ID (grant ID) or the like of a grant of a beam or a frequency permitted to be used for the communication device 110 may be included in association with information for identifying the permitted beam or frequency.

The communication device 110 includes a reception unit 11, a processing unit 12, a control unit 13, a transmission unit 14, and a storage unit 15. The transmission unit 14 performs processing of transmitting a signal to the communication control device 130 and another communication device wirelessly or by wire. The reception unit 11 performs processing of receiving a signal from the communication control device 130 or another communication device wirelessly or by wire. The control unit 13 controls the entire communication device 110 by controlling each element in the communication device 110. The processing unit 12 performs various processes (for example, processes related to various procedures such as a registration procedure) according to the present embodiment.

The storage unit 15 of the communication device 110 stores in advance various types of information necessary for communication with the communication control device 130 or another communication device. In a case where the communication device 110 can communicate with the device 140, various types of information necessary for communication with the device 140 may be stored in advance. Furthermore, the storage unit 15 stores information regarding various types of performance, specifications, and the like of the communication device 110. For example, the storage unit 15 of the communication device 110 stores an ID, position information, maximum transmission power information (EIRP capability value, maximum antenna power (maximum conducted power), and the like), dynamic beam pattern information, and the like of the communication device 110.

In the device 140 of the PAL holder in Fig. 9, the device 140 is connected to the SAS (communication control device) 130 wirelessly or by wire. As an example, the device 140 may be a terminal such as a personal computer (PC) connected to a fixed line. The device 140 may be, for example, a computer device such as a smartphone, a tablet, a laptop PC, or a desktop PC. Note that, in a case where the device 140 is wirelessly connected, the device 140 may be the terminal 120 in Fig. 1. Fig. 9 illustrates a configuration in which the device 140 directly communicates with the communication control device 130, but a configuration in which the device 140 communicates with the communication control device 130 using the communication device 110 as a relay device is also possible. Furthermore, the device 140 can be configured to directly communicate with the communication device 110. In these cases, the transmission unit 14 and the reception unit 11 of the communication device 110 can transmit and receive signals to and from the device 140.

Each processing block of the communication control device 130, the communication device 110, and the device 140 is configured by a hardware circuit, software (program or the like), or both of them. The storage unit 35 and the storage unit 15 are configured by any storage device such as a memory device, a magnetic storage device, or an optical disk. The storage unit 35 and the storage unit 15 may not be in the communication control device 130 and the communication device 110, but be externally connected to the communication control device 130 and the communication device 110 wirelessly or by wire. The transmission unit 34 and the reception unit 31 in the communication control device 130 and the transmission unit 14 and the reception unit 11 in the communication device 110 may include one or a plurality of network interfaces according to the number or types of connectable networks. In a case where the transmission unit 34 and the reception unit 31 in the communication control device 130 and the transmission unit 14 and the reception unit 11 in the communication device 110 perform wireless communication, the communication control device 130 and the communication device 110 may each include at least one antenna. In the present embodiment, the communication control device 130 and the communication device 110 perform wireless communication, and each includes at least one antenna.

Hereinafter, the communication system according to the present embodiment will be described in detail assuming that the communication device 110 is CBSD and the communication control device 130 is SAS.

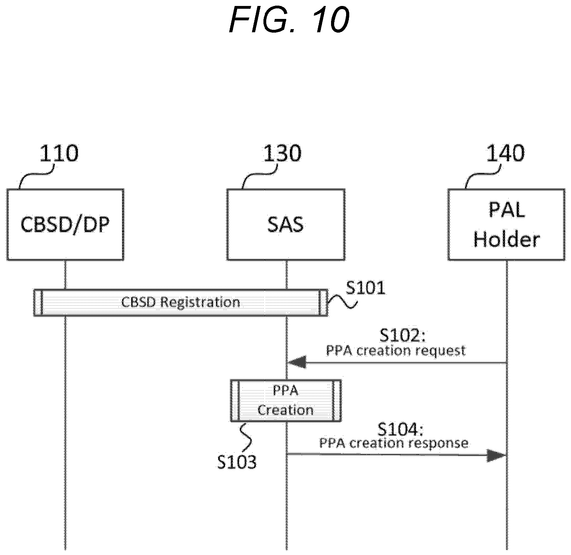

Fig. 10 illustrates an example of an operation sequence of the communication system according to the first embodiment. More specifically, Fig. 10 illustrates an operation sequence performed among the communication device 110 (CBSD), the communication control device 130 (SAS), and the device 140. Instead of the CBSD 110, a domain proxy (DP) may perform processing.

The SAS 130 performs a CBSD registration procedure which is a procedure for registering the CBSD 110 with each CBSD 110 (S101). The SAS 130 acquires the following information for each CBSD in order to calculate PPA in the CBSD registration procedure.

(1) Position information
(2) Maximum transmission power information (EIRP capability value, maximum antenna power (maximum conducted power), and the like) (3) Dynamic beam pattern information

The dynamic pattern information includes information regarding the movable range of the beam and the beam in each direction within the movable range. More specifically, the dynamic beam pattern information includes the following information.

· Beam movable range (horizontal plane and vertical plane)
· Step size (angle) as unit of beam movement
· Beam pattern in each direction

Each beam is associated with identification information (beam ID) for identifying the beam, and the beam can be identified by the beam ID. The beam ID may be issued by CBSD or by SAS.

The "beam pattern in each direction" may be an envelope expressed by a combination of an angle (azimuth angle and elevation angle) and a gain in a direction of the angle. Alternatively, it may be one (calculation expression) that can uniquely obtain a pattern by substituting an angle like a steering vector.

After the registration is completed, the SAS 130 issues or generates identification information (CBSD ID) for identifying the CBSD 110 to the registered CBSD 110, and stores the CBSD ID in an internal storage unit in association with the information acquired in step S101.

After the registration of the CBSD 110 by the SAS 130 is completed, the device 140 of a PAL holder transmits, to the SAS 130, a PPA creation request requesting creation of PPA to the SAS 130 (S102). The device 140 is operated by, for example, the PAL holder.

The PPA creation request includes information of a PAL from which the right to create a PPA is exercised, and a list (also referred to as a PPA Cluster List) storing an ID (CBSD ID) of a CBSD on which the PPA is created. One or more CBSD IDs are stored in the PPA Cluster List.

The SAS 130 that has received the PPA creation request performs PPA creation processing using the information acquired in step S101 (S103). Details of the processing performed in step S103 will be described later. The SAS 130 generates a PPA creation response including the contour information of the created PPA as a processing result, and transmits the PPA creation response to the device 140 of the PAL holder (S104).

The PAL holder can provide desired PPA contour information (PPA contour) to the SAS 130. In this case, the PPA contour information (PPA contour) may be included in the PPA creation request transmitted from the device 140 of the PAL holder. In this case, the PPA creation response transmitted from the SAS 130 includes information indicating whether or not the PPA of the desired contour information has been created. In a case where the PPA of the desired contour information cannot be created, the SAS 130 may create a PPA having a shape different from the desired contour information as a substitute possibility. In this case, the PPA creation response may include information indicating that the PPA of the desired contour information cannot be created and the contour information of the PPA generated as a substitute possibility.

Hereinafter, PPA creation processing according to the first embodiment will be described in detail. The PPA creation processing according to the first embodiment is obtained by improving the processing defined by R2-PAL-02-b and R2-PAL-02-c so that it is possible to create a PPA that enables protection of communication of a CBSD from interference even in a case where the CBSD performs dynamic beamforming. The PPA creation processing is performed by the processing unit 32 of the SAS 130. The PPA creation processing will be described below.

First, the beam in each horizontal direction within the movable range of the horizontal plane beam is determined for each step size (horizontal step size) in an azimuth angle direction (horizontal angle direction). A reference point, which is a point for calculating a predetermined metric, is commonly set for the same beam group in the horizontal direction (a plurality of beams in the vertical plane movable range) determined for each horizontal step size. Specifically, a plurality of reference points is set on straight lines (radial straight lines) extending from the reference height with respect to the CBSD along the horizontal plane in directions of 0 to 359 degrees (azimuth angles) including the horizontal direction. A plurality of reference points set on respective radial straight lines of 0 to 359 degrees is used in common for the same beam group in the horizontal direction (a plurality of beams in the vertical plane movable range). Here, the predetermined metric is a metric based on radio wave signal strength, and is, for example, median signal strength in a case of CBRS.

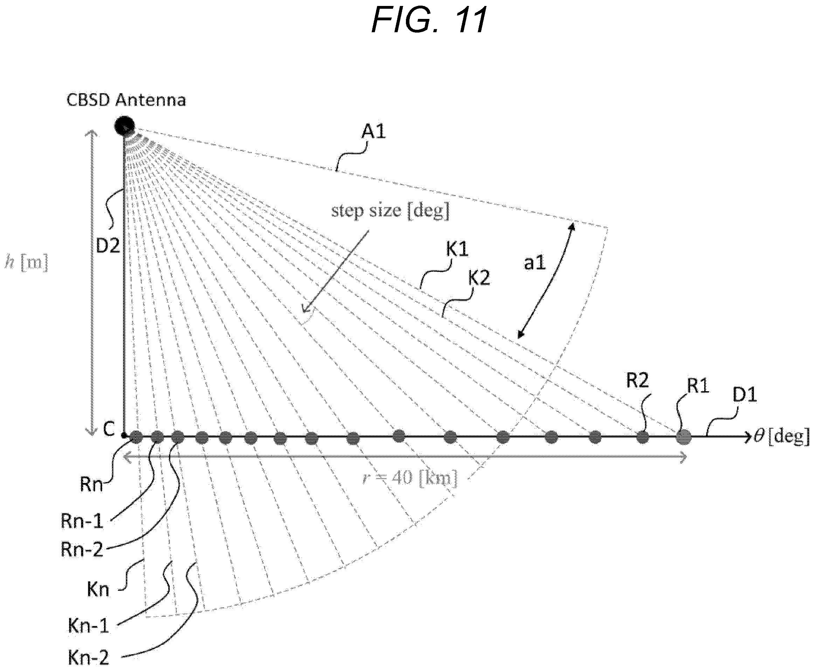

Fig. 11 is a diagram for describing an example of setting a plurality of reference points on a radial straight line extending in an azimuth angle direction corresponding to a certain horizontal direction $\theta$. The reference point is determined on the basis of the antenna height h corresponding to a height position of the CBSD and the step size (vertical step size) in an elevation angle direction within a vertical plane beam movable range. The antenna height h corresponds to an installation height of an antenna of the CBSD (for example, a height from a reference plane such as a ground surface). An intersection of a straight line D2 extending perpendicularly to the reference plane (ground surface or the like) from the CBSD antenna and the reference plane is defined as an origin C. The origin C corresponds to a point at a height below the CBSD by h [m].

The vertical plane beam movable range A1 in the horizontal direction $\theta$ is schematically illustrated in a fan shape. An intersection of a straight line Kx (= K1, K2, K3,..., Kn-2, Kn-1, Kn) extending from the position of the CBSD antenna in the direction of the elevation angle (beam direction) for each vertical step size in the vertical plane beam movable range A1 and a straight line (radial straight line) D1 extending from the origin C in the $\theta$ direction is defined as a reference point Rx (= R1, R2, R3,..., Rn-1, Rn) in order from the farther side from the CBSD.

The reference point is obtained in the range from the position of the CBSD antenna to r (= 40 [km]) in the horizontal direction. r (= 40 [km]) is based on the requirement R2-PAL-02 described in Fig. 7. In the example of Fig. 11, the beam of CBSD can also be formed in the direction including a partial region a1 in the vertical plane beam movable range A1, but a point at which the straight line passing through the region a1 intersects the straight line D1 exceeds the range of r (= 40 [km]) and is not used as the reference point.

A plurality of reference points is set for remaining azimuth angle directions (359 directions) other than the horizontal direction $\theta$ (azimuth angle direction). The plurality of reference points with respect to the remaining other azimuth angle directions is only required to be positions obtained by moving the plurality of reference points obtained with respect to the horizontal direction $\theta$ described above to a position rotated about the origin C according to the difference in azimuth angle. In the remaining other azimuth angle directions, distances (relative positions) from the origin C to the plurality of reference points on the radial straight lines extending from the origin C in the directions are the same as the plurality of reference points obtained with respect to the horizontal direction $\theta$, and only arrangement directions (radial directions) of the plurality of reference points are different.

In this manner, common reference points are calculated (set) for a beam group (a plurality of beams included in the vertical plane beam movable range A1) having a certain horizontal direction $\theta$ as a beam direction. Similarly, for the other horizontal directions $\theta$ for each horizontal step size in a horizontal plane beam movable range, common reference points (a plurality of reference points on respective radial straight lines of 0 to 359 degrees) are set for the beam group (a plurality of beams included in the vertical plane beam movable range) having the other horizontal directions in a manner similar to the above-described method.

When the movable range and the movable step size (angle) of the vertical plane beam are the same, the distances (relative positions) from the origin C to a plurality of reference points on radial straight lines extending in 360 respective azimuth angle directions from the origin C are the same as those in a case where it is calculated in the above-described horizontal direction $\theta$ even in other horizontal directions $\theta$. In the present embodiment, a case is assumed where the movable range and the movable step size (angle) of the vertical plane beam are the same in all the horizontal directions (azimuth angle directions) in the horizontal plane beam movable range. Therefore, in all the beams in the horizontal plane beam movable range and the vertical plane beam movable range, the relative positions of the plurality of reference points from the origin C in the 360 radial straight lines extending from the origin are the same. Therefore, if a plurality of reference points on 360 radial straight lines is obtained for one beam group in the horizontal direction, calculation of the reference points can be omitted for other beam groups in the horizontal direction. Note that, in the present embodiment, the reference point is calculated for each of the 360 azimuth angles, but this is merely an example. For example, the difference between adjacent azimuth angles may be doubled, and the reference point may be calculated for each of 180 azimuth angles at intervals of 2 degrees.

This is an example of the movable range of the vertical plane beam illustrated in Fig. 11, and the beam may be movable in a direction of the CBSD antenna (direction opposite to the installation surface) higher than the height (h[m]). In this case, as in the above description, a plurality of reference points is only required to be calculated in the range of r (= 40 [km]).

In the conventional method described above with reference to Fig. 7, the reference points are set at equal intervals. On the other hand, in the present embodiment, as illustrated in Fig. 11, a point at which the straight line Kx extending in each direction (gain peak direction) of the vertical plane beam and the radial straight line D1 intersect is defined as the reference point Rx. By setting the reference point corresponding to the direction of each vertical plane beam (gain peak direction) for each horizontal direction θ as described above, it is possible to create a PPA having a shape capable of appropriately protecting communication (capable of suppressing interference from the outside) even in a case where CBSD performs dynamic beamforming. For example, even in a case where a point is determined to have a small metric in the conventional method even though the metric is large, and the point is excluded from the protection zone, the point can be included in the protection zone in the present embodiment.

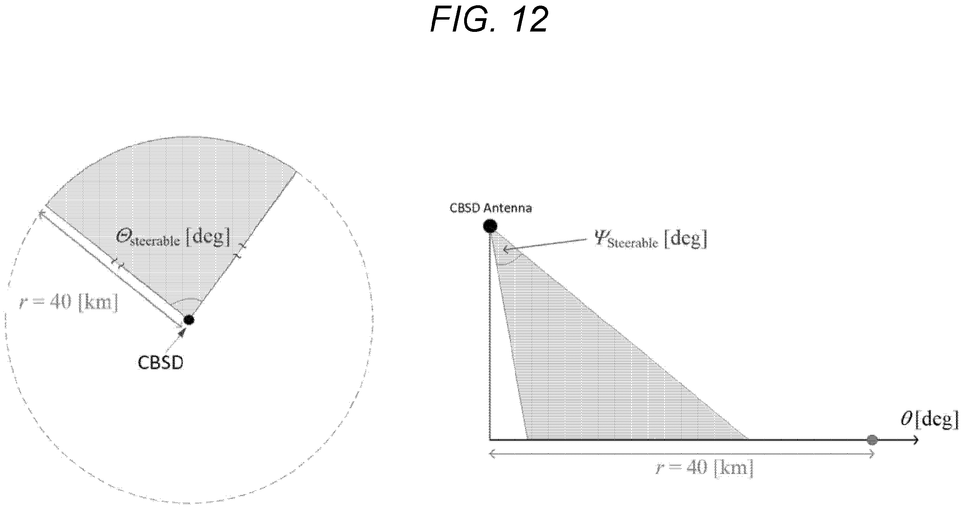

Fig. 12 is a diagram illustrating an example of a beam movable range and a beam movable step size in the CBSD. The beam movable range is defined as follows.

$(\Theta_{steerable}, \Psi_{steerable})$

The beam movable step size is defined as follows.

$(\Delta\theta_{steerable}, \Delta\psi_{steerable})$

The number of beams is $N_{beam}$.

$\Theta_{steerable}$

indicates the beam possible range in the horizontal plane direction (azimuth angle direction) as illustrated in the left diagram of Fig. 12.

$\Psi_{steerable}$

indicates a beam movable range in the vertical plane direction as illustrated in the right diagram of Fig. 12.

$\Delta\theta_{steerable}$

indicates the horizontal step size.

$\Delta\psi_{steerable}$

indicates the vertical step size. At this time, the number of beam patterns that can be formed by dynamic beamforming can be expressed by the following Expression (3).

[Math. 4]

$$N_{beam} = \frac{\Theta_{steerable}}{\Delta\theta_{steerable}} \cdot \frac{\Psi_{steerable}}{\Delta\psi_{steerable}} \qquad (3)$$

In the present embodiment, a case where one beam can be transmitted and movable at the same time within the beam movable range is assumed, but a case where two or more beams can be transmitted and movable at the same time is not excluded. Furthermore, in this case, it is assumed that the frequencies of beams that can be transmitted in the beam movable range are the same, but a case where the frequencies are different from each other is not excluded.

The SAS 130 calculates, for each beam, a metric based on radio wave signal strength for a plurality of reference points on 360 radial straight lines. The SAS 130 identifies a reference point at which the metric satisfies a threshold. That the metric satisfies the threshold means, for example, that the metric is equal to or greater than the threshold, and in the present embodiment, a case where the metric is equal to or greater than the threshold will be described. In the case of the CBRS, the metric is, for example, median signal strength. In the case of the CBRS, the threshold is, for example, -96 [dBm/10 MHz]. Details will be described below.

The number of reference points (the number of reference points set on the radial straight line) at the azimuth angle (horizontal azimuth angle) $\theta_k$ is defined as $N_{RP,\theta k}$. The reference points $n_{RP,\theta k}$ ($1 \leq n_{RP,\theta k} \leq N_{RP,\theta k}$) correspond to the respective vertical plane beam elevation angles. The median signal strength at reference points $n_{RP,\theta k}$,

$p_{n_{RP,\theta_k}[dBm/10MHz]}$

can be calculated by the following Expression (4).

[Math. 5]

$$P_{n_{RP,\theta_k}[dBm/10MHz]} = P_{C[dBm/10MHz]} + G_{Tx,n_{RP,\theta_k}[dB]} - L\left(\theta_k, \psi_{n_{RP,k}}\right)_{[dB]} \quad\quad (4)$$

Here, $P_{C[dBm/10Mhz]}$

is the antenna power (conducted power), and $G_{Tx,n_{RP,\theta_k}[dB]}$ is the beam gain. $L\left(\theta_k, \psi_{n_{RP,\theta_k}}\right)_{[dB]}$ is a path loss between the transmission point and a point (= reference point $n_{RP,\theta k}$) on the radial straight line in a direction,

$\theta_k, \psi_{n_{RP,\theta_k}}$

( ) from the transmission point.

Note that, as a matter of course, another type of loss such as feeder loss or another type of gain may be

$L\left(\theta_k, \psi_{n_{RP,\theta_k}}\right)_{[dB]}$

considered in Expression (4). For calculating the path loss, any radio wave propagation model may be used. In addition, instead of logarithmic representation, a mathematical expression converted into actual value representation may be used.

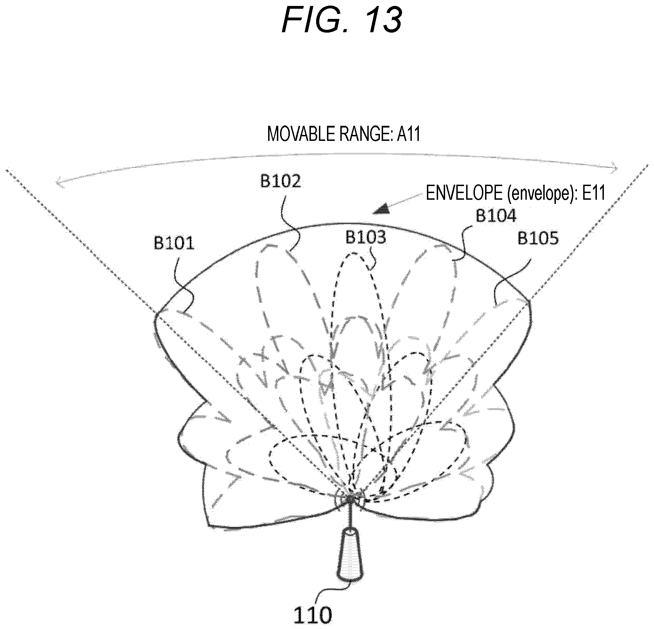

Fig. 13 illustrates an example of a plurality of beams that can be transmitted by a base station 110. As an example of the beam movable within the beam movable range A11, a plurality of beams B101, B102, B103, B104, and B105 is illustrated. The movable range of the beam specifically means a range including the peak direction of the beam. In addition to the beams B101 to B105, beams in one or more other directions may be transmittable by the base station 110. An envelope E11 comprehensively indicates a radio wave range used for communication by the beams B101 to B105 and the like, and as an example, it is necessary to protect communication in this range. The envelope E11 may be treated as one beam.

Hereinafter, an example will be described in which a set of points at which the median signal strength (metric) is equal to or greater than the threshold among the reference points is expressed as RP, and the set RP for the CBSD is calculated in a case where the CBSD can form beams of the number of patterns represented by Expression (3).

A set of points at which the median signal strength (metric) is equal to or greater than a threshold among the reference points is expressed as RP. Hereinafter, an example in which the set RP for the CBSD is calculated in a case where the CBSD can form beams of the number of patterns indicated by Expression (3) will be described.

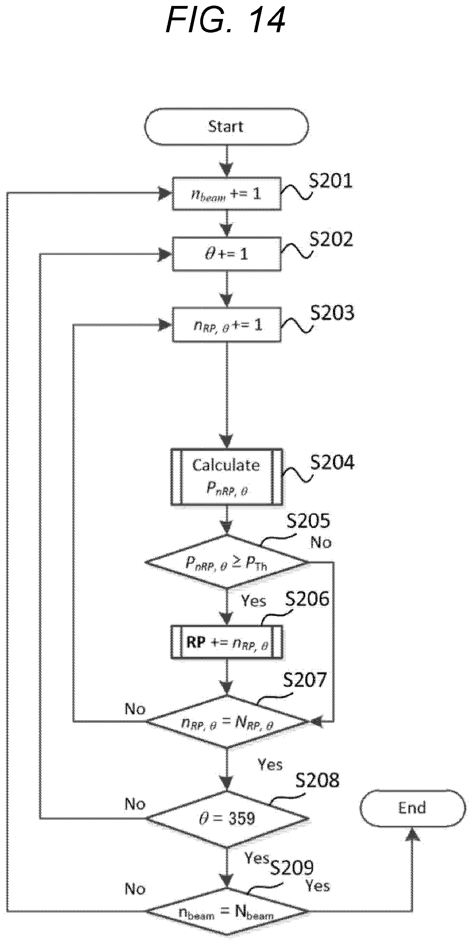

Fig. 14 is a flowchart illustrating an example of processing of calculating the set RP for one CBSD. The processing of Fig. 14 is performed by the processing unit 32 of the SAS (communication control device) 130.

An initial value of the set RP is set as an empty set (RP = {}), and an index indicating a reference point at an azimuth angle (horizontal plane azimuth angle) $\theta$ is defined as $n_{RP,\theta}$ (the total number of reference points is $N_{RP,\theta}$). In addition, the median signal strength as a metric is defined as $P_{nRP,\theta}$, and the threshold is defined as $P_{Th}$. $N_{beam}$ represents the number of beams, and $n_{beam}$ represents a number (index) identifying the beam. An initial value of $n_{beam}$ is zero. An initial value of the horizontal plane azimuth angle $\theta$ is set to -1. An initial value of $n_{RP,\theta}$ is set to zero.

First, the index $n_{beam}$ of the beam is incremented by one, and the $n_{beam}$-th beam is selected as the target beam (S201). Since the initial value of the $n_{beam}$ is zero, the first beam is selected in the first processing.

The horizontal plane azimuth angle $\theta$ is incremented by one (S202). Since the initial value of $\theta$ is -1, $\theta$ is set to zero degrees in the first processing.

The index $n_{RP,\theta}$ of the reference point is incremented by one, and the $n_{RP,\theta}$-th reference point is selected (S203). The reference point with respect to the horizontal plane azimuth angle $\theta$ is set by the method described above with reference to Fig. 11. Since the initial value of $n_{RP,\theta}$ is zero, the first reference point is selected in the first processing. When the x-th reference point is represented as Rx, the reference point R1 farthest from the CBSD is selected in the example of Fig. 11 described above.

The median signal strength $P_{nRP,\theta}$ as a metric is calculated for the reference point selected in step S203 (S204). $P_{nRP,\theta}$ is calculated by, for example, Expression (4) described above.

It is determined whether the median signal strength $P_{nRP,\theta}$ is equal to or greater than the threshold $P_{Th}$ (S205). If the median signal strength $P_{nRP,\theta}$ is less than the threshold $P_{Th}$, the process proceeds to step S207. If the median signal strength $P_{nRP,\theta}$ is equal to or greater than the threshold $P_{Th}$, the index $n_{RP,\theta}$ is added to the set RP (S206). Thereafter, the process proceeds to step S207.

It is determined whether the index $\underline{n}_{RP,\theta}$ have reached the total number $N_{RP,\theta}$ of the reference points (S207). In a case where the total number $N_{RP,\theta}$ has not been reached, the process returns to step S203, and the index $\underline{n}_{RP,\theta}$ is incremented by one.

In a case where the total number $N_{RP,\theta}$ has been reached, it is determined whether the horizontal plane azimuth angle $\theta$ has reached 359 (S208). In a case where $\theta$ has not reached 359, the process returns to step S202, and the horizontal plane azimuth angle 9 is incremented by one.

In a case where $\theta$ reaches 359, it is determined whether the index $n_{beam}$ of the beam reaches the number of beams $N_{beam}$ (S209). In a case where the number of beams $N_{beam}$ has not been reached, the process returns to step S201, and the index $n_{beam}$ is incremented by one. In a case where the number of beams $N_{beam}$ has been reached, this process ends.

For a reference point after the median signal strength (metric) is once determined to be equal to or greater than the threshold in the processing of step S204 described above, the calculation of the median signal strength may be omitted assuming that the median signal strength is equal to or greater than the threshold. For example, in a case where the metric calculated at the reference points R1, R2, and R3 is less than the threshold but the metric calculated at the reference point R4 is equal to or greater than the threshold, the calculation of the metric may be omitted for R5 to Rn. The reference points R5 to Rn from which the calculation is omitted may be added to the set RP. In this way, the metric of the reference point is calculated until the metric becomes equal to or greater than the threshold, and after the metric becomes equal to or greater than the threshold, the calculation of the metric for the reference point is omitted. Thus, it is possible to suppress a dramatic increase in calculation load caused by performing processing for each beam in consideration of dynamic beamforming.

The SAS (communication control device) 130 specifies a reference point farthest (outermost) from the CBSD among a plurality of reference points on the radial straight line corresponding to each horizontal plane direction (0 to 359 degrees) on the basis of the set RP obtained by the processing of Fig. 14. The SAS 130 obtains a PPA contour (corresponding to $C(\theta)$ in the conventional method) by connecting the specified reference points with a line. In this manner, a region surrounded by the specified reference points is defined as a protection zone (PPA contour).

Thereafter, similarly to the conventional method, the SAS 130 may smooth $C(\theta)$ using a Hamming filter or the like to obtain the PPA contour $S(\theta)$. The contour $C(\theta)$ or $S(\theta)$ is an example of a protection zone (first protection zone) in which the CBSD is protected from interference. Furthermore, the SAS may also calculate the contour $S(\theta)$ or $C(\theta)$ for other CBSDs in the PPA cluster list and combine the contours $S(\theta)$ or $C(\theta)$ for all CBSDs in the PPA cluster list to create a PAL protection contour (third protection zone), as in the conventional method.

As described above, according to the present embodiment, the metrics at the plurality of reference points are calculated for each beam of the CBSD, and the protection zone (PPA) in which the CBSD is protected from interference is created on the basis of the metrics calculated for each beam. Thus, even in a case where the CBSD performs dynamic beamforming, a protection zone (PPA) having an appropriate shape can be created, and communication of the CBSD can be protected from external interference.

(Modification 1)

In the first embodiment described above, the reference point farthest (outermost) from the CBSD among the plurality of reference points on the radial straight lines corresponding to respective horizontal plane directions (0 to 359 degrees) is specified on the basis of the set RP, and the PPA contour is obtained. As another method, a region specified by a reference point included in the set RP may be PPA ($C(\theta)$ or $S(\theta)$).

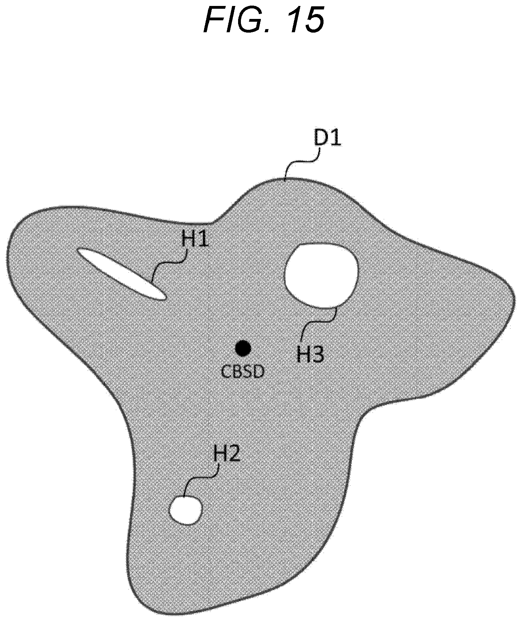

Fig. 15 is an explanatory diagram of Modification 1. The illustrated region D1 is a region specified (occupied) by a set of reference points included in the set RP, that is, a region in which median signal power equal to or greater than a threshold is calculated. Specifically, for example, a line circumscribing the reference point group may be calculated, and a region surrounded by the calculated line may be set as the region D1. Alternatively, a region having a predetermined size (for example, a region in a certain range centered on the reference point) may be set for each reference point, and a set of the set regions may be set as the region D1. Alternatively, in a case where the reference point itself is a region having a certain range, a set of reference points may be set as the region D1. In the region D1, a region specified by the reference point not included in the set RP, that is, a region (hole region) having median signal power less than the threshold may occur. Regions H1, H2, and H3 are examples of hole regions. The processing unit 32 of the SAS may detect the hole region and treat the detected hole region as a region whose metric is equal to or greater than the threshold on the basis of an arbitrary criterion (that is, the hole region is included in the PPA as a part of the PPA). For example, in a case where the area (size) of the hole region is less than a certain value, the hole region is included in the PPA, and in a case where the area (size) is equal to or larger than the certain size, the hole region is not included in the PPA.

(Modification 2)

In the processing of the flowchart illustrated in Fig. 14 described above, the median signal strength is calculated in order from the reference point far from the CBSD to the reference point close to the CBSD, but conversely, the median signal strength of the reference point may be calculated in order from the reference point close to the CBSD. That is, the median signal strength is calculated in the order of Rn, Rn-1, Rn-2, ..., R2, and R1. In this case, it may be determined to omit the calculation of the median signal strength for the reference point after it is determined that the median signal strength is less than the threshold, and not to add the reference point for which the calculation is omitted to the set RP.

(Modification 3)

In Fig. 11 described above, the reference point R1 farthest from the CBSD coincides with the point of r = 40 [km] from the origin C, but there may be a case where the reference point R1 is located before the point of r = 40 [km] (close to the CBSD side). In this case, a point of r = 40 [km] from the origin O may be unconditionally treated as the reference point. In this case, the processing of the flowchart of Fig. 14 described above is only required to be executed using the reference point of r = 40 [km] as the reference point of the target for which the metric calculation is first performed.

(Modification 4)

In the first embodiment described above, the condition for selecting the reference point to be included in the set RP is that the median signal strength is equal to or greater than the threshold, but other examples are also possible. For example, a condition that the maximum signal strength or the minimum signal strength is equal to or greater than the threshold may be used as a condition for selecting the reference point.
In addition, various variations such as a method based on the standard deviation of the signal strength can be considered as a condition for selecting the reference point.

(Modification 5)

In the first embodiment described above, as illustrated in the example of Fig. 11 described above, a common reference point is used for each beam included in the same vertical plane beam movable range, but different reference points may be set for respective beams. For example, a point where a straight line corresponding to the direction (elevation angle) of the beam intersects with the straight line D1 and a group of points arranged at regular intervals in the left and right directions (the side close to the CBSD and the side far from the CBSD) along the straight line D1 from the point may be set as the reference points of the beam. For other beams in the same vertical plane beam movable range, the reference point is set in a similar manner. Even with this method, although the amount of calculation increases, the reference point can be set in consideration of the beam direction (gain direction), so that it is possible to create PPA having a shape suitable for dynamic beamforming.

(Second embodiment)

In the processing of the flowchart of Fig. 14 used in the description of the first embodiment, for the reference point once stored in the set RP in the processing for a certain beam, it is not necessary to calculate the metric again in the processing for another beam. With this arrangement, the number of calculation can be reduced.

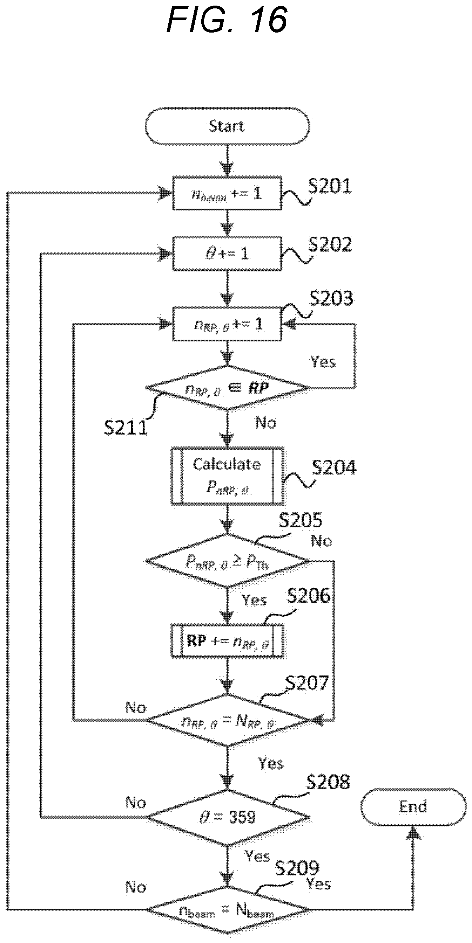

Fig. 16 is a flowchart of processing according to a second embodiment, and illustrates an example of processing of calculating the set RP for one CBSD. The processing of Fig. 16 is performed by the processing unit 32 of the SAS (communication control device) 130. The flowchart of Fig. 16 is obtained by adding step S211 to the flowchart of Fig. 14. Since steps S201 to S209 are similar to those in Fig. 14, description thereof is omitted.
In step S211, it is determined whether the index $n_{RP, \theta}$ of the reference point has been stored in the set RP. In a case where the data has been stored, the process returns to step S203, and the index $n_{RP, \theta}$ is incremented by one (S203). If not stored, the process proceeds to step S204.
As described above, according to the present embodiment, the calculation amount of the processing of calculating the set RP can be reduced.

(Third embodiment)

A constraint may be imposed on at least one of an elevation angle or a horizontal angle (azimuth angle) of beam transmission by the CBSD. For example, a constraint such as prohibition of beam transmission to a certain azimuth angle may be constantly imposed at the position of the CBSD or the like. In this case, the calculation of the metric (median signal strength) at the azimuth angle is skipped, and the region of the azimuth angle is excluded from the protection zone. Note that, conventionally, registration of CBSD using a fixed beam having a peak at the prohibited azimuth angle is rejected at the time of CBSD Registration, and thus processing in consideration of such constraint is not necessary.

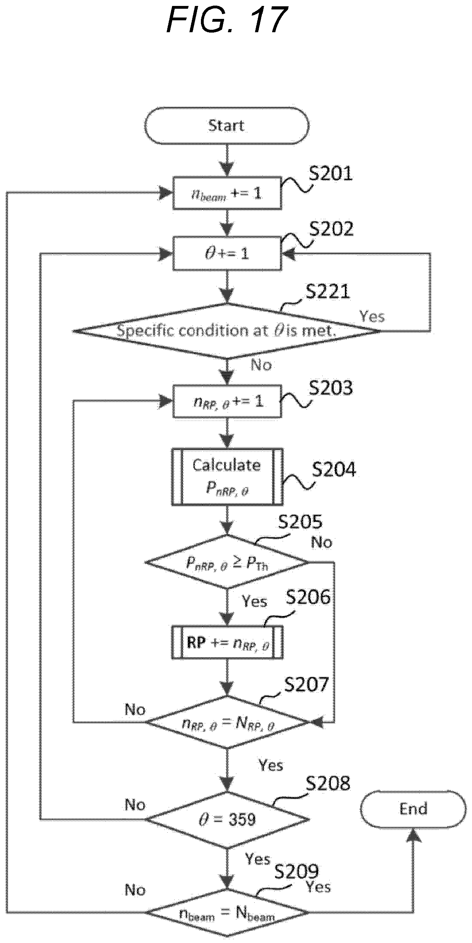

Fig. 17 is a flowchart of processing according to the third embodiment, and illustrates an example in a case where there is a static constraint on a certain azimuth angle (horizontal plane azimuth angle) in the processing of calculating the set RP for one CBSD. The processing of Fig. 17 is performed by the processing unit 32 of the SAS (communication control device) 130. Fig. 17 corresponds to the flowchart of Fig. 14 used in the description of the first embodiment to which step S221 is added. Since steps S201 to S209 are similar to those in Fig. 14, description thereof is omitted.

Note that, as in the second embodiment described above, it is also possible to omit the calculation of the metric for the reference point stored in the set RP. That is, step S221 can be added to the flowchart of Fig. 16 used in the description of the second embodiment described above.

In step S221 of Fig. 17, it is determined whether the horizontal plane direction (azimuth angle) $\theta$ satisfies a constraint of the beam transmission, that is, whether the horizontal plane direction $\theta$ satisfies a specific condition. In a case where the constraint is not satisfied (that is, when the specific condition is satisfied), it is determined to omit the calculation of the metric for the horizontal plane direction $\theta$, and the process returns to step S202. In a case where the constraint is satisfied (that is, when the specific condition is not satisfied), the process proceeds to step S203.

Hereinafter, a specific example of the specific condition used in step S221 will be described.

(a) It is assumed that there is a constraint that the peak of the beam should not face a certain horizontal plane direction (azimuth angle). In this case, when the $n_{beam}$-th beam has a peak in the horizontal plane direction, the specific condition is satisfied.

(b) It is assumed that there is a constraint that a certain horizontal plane direction (azimuth angle) should not be included in a predetermined beam width (for example, a half-value width (3 dB bandwidth)). In this case, when the horizontal plane direction (azimuth angle) is included in the beam width of the $n_{beam}$-th beam, the specific condition is satisfied.

(c) It is assumed that there is a constraint that a transmission power level (EIRP, power spectral density, conducted power level, power flux density, and the like) in a certain horizontal plane direction (azimuth angle) has to be less than a threshold. In this case, when the transmission power level of the $n_{beam}$-th beam in the horizontal plane direction exceeds the threshold, the specific condition is satisfied.

In a case where the constraint (c) above is designated, the threshold may be satisfied by adjusting the transmission power level of the CBSD. In such a case, when the median signal power $P_{nRP}$ in the direction $\theta$ is calculated, $P_{nRP}$ may be calculated using the adjusted transmission power level (= transmission power level less than the threshold). In other words, "No" (the specific condition is not satisfied) is passed in the conditional branch in step S221 in the flowchart in Fig. 17 described above. Moreover, in a case where such adjustment of the transmission power level is performed, it is necessary to consider the transmission power level after the adjustment when calculating an available beam or when issuing a PAL grant (grant). Note that the PAL grant is a permission to use a beam or a frequency based on the PAL, and is issued by the SAS 130.

As described above, according to the present embodiment, in a case where a constraint is imposed on the beam transmission direction by the CBSD, the PPA having an appropriate shape can be generated by calculating the median signal strength only for the horizontal plane direction (azimuth angle) satisfying the constraint and excluding the region in the horizontal plane direction not satisfying the constraint from the PPA. The region excluded from the PPA can be used for the spectrum by other systems, and the spectrum use efficiency can be increased.

(Fourth embodiment)

In the third embodiment described above, an example of processing in a case where there is a static constraint in the horizontal plane direction (azimuth angle) of the CBSD has been described. In the fourth embodiment, an example of processing in a case where there is a static constraint that does not depend on the horizontal plane direction (azimuth angle) will be described.

For example, regardless of the horizontal plane azimuth angle of the CBSD, there is a possibility that a constraint regarding a specific place is provided. In a case where the reference point does not satisfy the constraint, the calculation of the metric (median signal strength) is omitted, and the reference point is not added to the set RP.

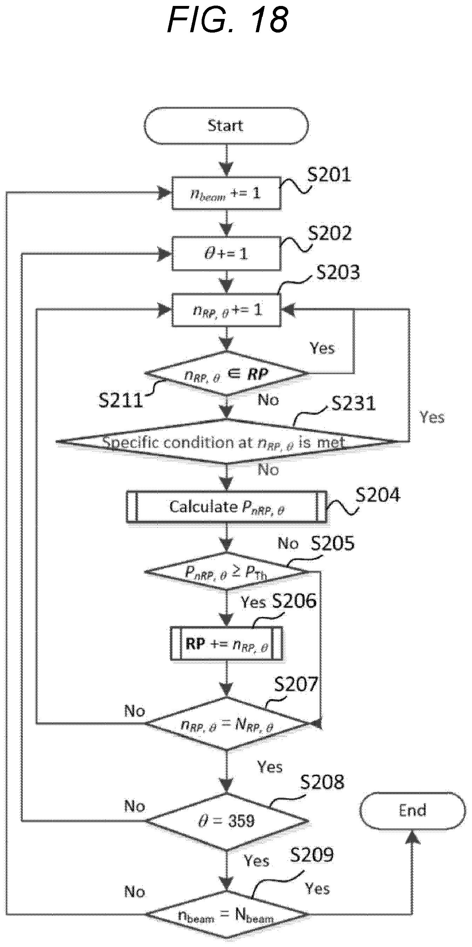

Fig. 18 is a flowchart of processing according to the fourth embodiment, and illustrates an example in a case where there is a constraint regarding a specific location in the processing of calculating the set RP for one CBSD. The processing of Fig. 18 is performed by the processing unit 32 of the SAS (communication control device) 130. Fig. 18 corresponds to the flowchart of Fig. 16 used in the description of the second embodiment to which step S231 is added. Steps S201 to S209 and S211 in Fig. 18 are the same as those in Fig. 16, and thus description thereof is omitted.

In step S231 of Fig. 18, it is determined whether the reference point selected in step S203 satisfies a constraint on a specific location, that is, whether the reference point selected in step S203 satisfies a specific condition. In a case where the constraint is not satisfied (that is, in a case where the specific condition is satisfied), it is determined to omit the calculation of the metric for the reference point, and the process returns to step S203. In a case where the constraint is satisfied (that is, in a case where the specific condition is not satisfied), the process proceeds to step S204.

Hereinafter, a specific example of the specific condition used in the processing of step S231 will be described.

(a) It is assumed that there is a constraint that the peak of the beam should not face a predetermined area. In this case, a condition that the $n_{RP}$-th reference point is included in the area, and the $n_{beam}$-th beam has a peak in the direction of the $n_{RP}$-th reference point corresponds to the specific condition.

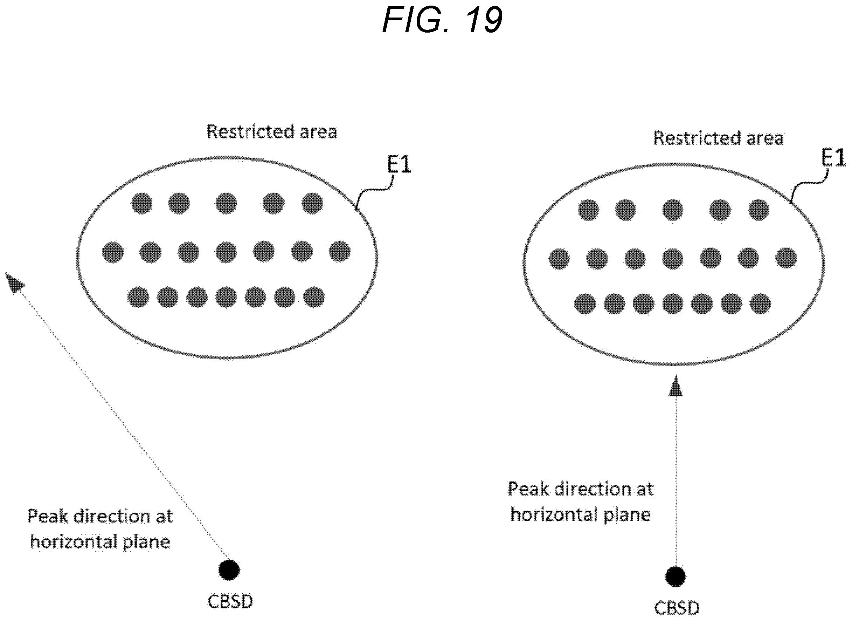

Fig. 19 illustrates an example in which the specific condition illustrated in (a) above is satisfied and an example in which the specific condition is not satisfied. A relationship between a restricted area E1, which is a predetermined area, and a beam of the CBSD is illustrated. Each point in the restricted area E1 indicates a reference point included in the restricted area E1 among the reference points set for the CBSD.

In the left part of Fig. 19, since the peak direction of the beam does not face a restricted area which is a predetermined area, the constraint is satisfied. That is, the specific condition that "the $n_{RP}$-th reference point is included in the area, and the $n_{beam}$-th beam has a peak in the direction of the $n_{RP}$-th reference point" is not satisfied. In this case, the branching condition of step S231 of the flowchart of Fig. 18 is "No".

On the other hand, on the right side of Fig. 19, since the peak direction of the beam is directed to the restricted area E1 which is a predetermined area, the constraint is not satisfied. That is, a specific condition that "the $n_{RP}$-th reference point is included in the area, and the $n_{beam}$-th beam has a peak in the direction of the $n_{RP}$-th reference point" is satisfied. In this case, the branching condition of step S231 of the flowchart of Fig. 18 is "Yes".

(b) There is a constraint that a peak of a beam should not face a predetermined area and a range of a predetermined beam width (for example, a half-value width (3 dB bandwidth)) should not overlap with the predetermined area (the predetermined beam width should not include at least a part of the predetermined area). In this case, a condition that the $n_{RP}$-th reference point is included in the area and a direction within a predetermined beam width range from the peak of the $n_{beam}$-th beam includes the $n_{RP}$-th reference point corresponds to the specific condition.

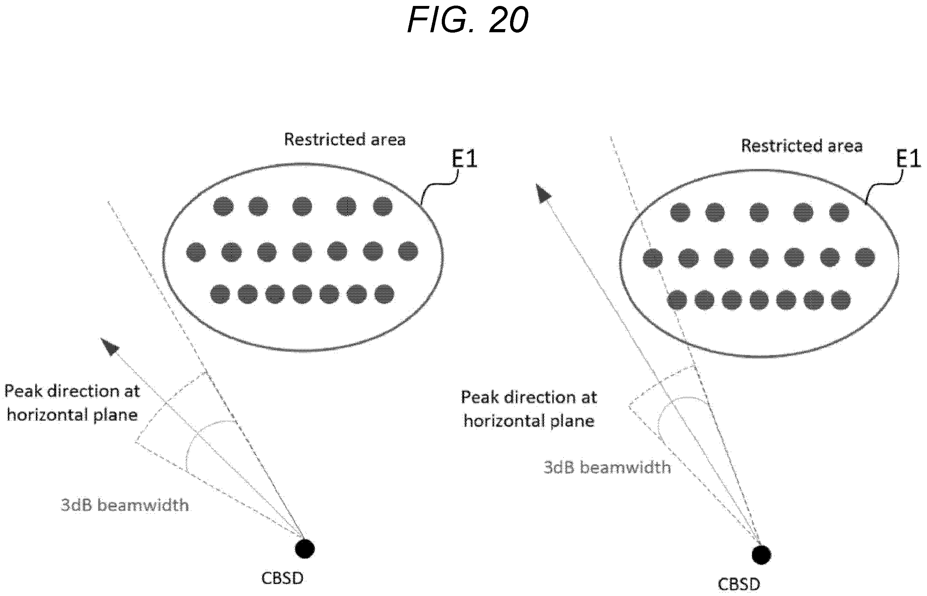

Fig. 20 illustrates an example in which the specific condition illustrated in (b) above is satisfied and an example in which the specific condition is not satisfied. In the left part of Fig. 20, the peak direction of the beam does not face a restricted area which is a predetermined area. Furthermore, the range of the half-value width (the half-value width (3 dB bandwidth) in the example of the drawing) does not include at least a part of the restricted area (the range of the half-value width does not overlap the restricted area). Therefore, the constraint is satisfied. That is, the specific condition that "the $n_{RP}$-th reference point is included in the area, and a direction within a range of a predetermined beam width from a peak of the $n_{beam}$-th beam includes the $n_{RP}$-th reference point" is not satisfied.

On the other hand, in the right part of Fig. 20, although the peak direction of the beam faces the outside of a restricted area which is a predetermined area, the direction within the range of the half-value width includes a part of the restricted area, and thus the constraint is not satisfied. That is, the specific condition that "the $n_{RP}$-th reference point is included in the area, and a direction within a range of a predetermined beam width from a peak of the $n_{beam}$-th beam includes the $n_{RP}$-th reference point" is satisfied.

(c) There is a constraint that the transmission power level (EIRP, power spectral density, conducted power level, power flux density, and the like) in the direction of the beam facing the predetermined area has to be less than a threshold. In this case, when the $n_{RP}$-th reference point is included in the area and the transmission power level of the $n_{beam}$-th beam in the direction of the $n_{RP}$-th reference point exceeds the threshold, the specific condition is satisfied.

In a case where the constraint (c) above is designated, the threshold may be satisfied by adjusting the transmission power level. In such a case, when calculating $P_{nRP}$ in the direction $\theta$, $P_{nRP}$ may be calculated using the adjusted transmission power level (= transmission power level less than the threshold). In other words, "No" (a specific condition is not satisfied) is passed in the conditional branch in step S231 in the flowchart in Fig. 18 described above. Moreover, in a case where such adjustment of the transmission power level is performed, the adjusted transmission power level is considered when calculating the available beam or when issuing a PAL grant (grant).

As described above, according to the present embodiment, in a case where there is a static constraint that does not depend on the horizontal plane direction (azimuth angle), the PPA having an appropriate shape can be generated by calculating the median signal strength only for the reference point satisfying the constraint and excluding the reference point not satisfying the constraint from the protection zone. The region excluded from the PPA can be used for the spectrum by another system, and the spectrum use efficiency can be increased.

(Fifth embodiment)

In the fifth embodiment, by improving the processing defined by R2-PAL-02-b and R2-PAL-02-c by a method different from the first embodiment, a PPA capable of protecting the communication of the CBSD from external interference is created even in a case where the CBSD performs dynamic beamforming.

In the fifth embodiment, a protection contour (corresponding to C(θ) in the conventional method) of PPA is obtained by calculating beam-based PPA (PPA) for CBSD of interest in units of beams and merging (combining) all the obtained beam-based PPAs (PPAs). The PPA obtained by merging all the beam-based PPAs (PPAs) is referred to as a Baseline PPA. As in the first embodiment, in a case where there is a stationary constraint on the position of the CBSD or the like, for example, a restriction on the azimuth angle, it is only required to skip calculation at the azimuth angle. The method of the fifth embodiment has an advantage that a PPA in units of beams can be obtained.

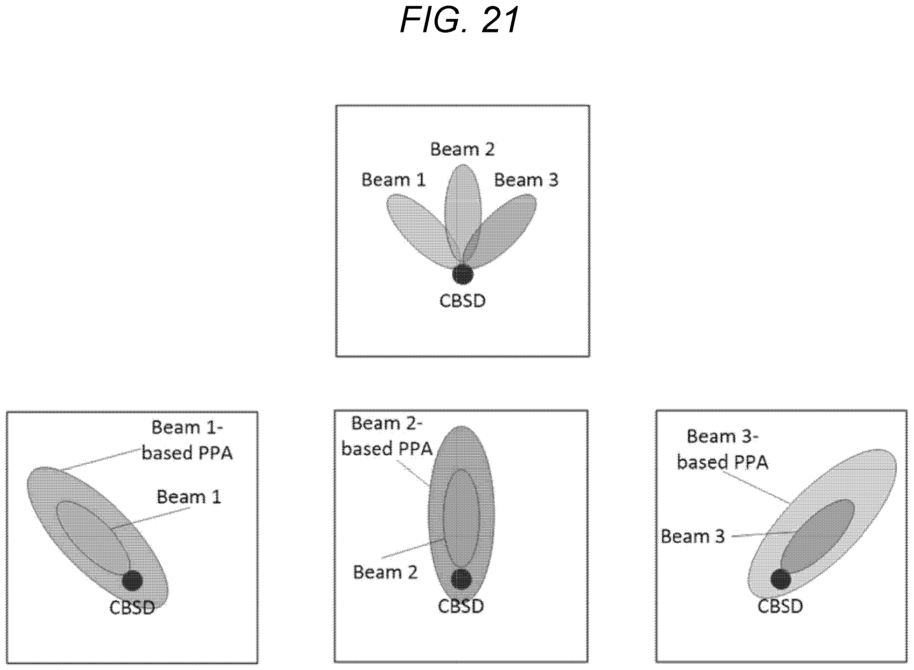

Fig. 21 illustrates an example of beams on which CBSDs can be formed and beam-based PPAs obtained for each beam. The upper diagram of Fig. 21 illustrates an example of three beams (Beam 1, Beam 2, and Beam 3) formed by the CBSD. The lower diagram of Fig. 21 illustrates an example of Beam 1-based PPA obtained for Beam 1, an example of Beam 2-based PPA obtained for Beam 2, and an example of Beam 3-based PPA obtained for Beam 3.

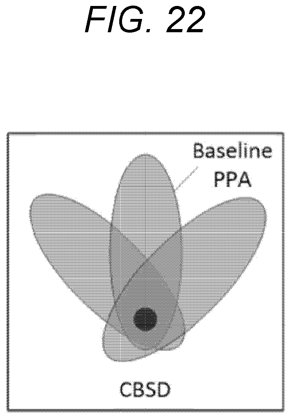

Fig. 22 illustrates an example of Baseline PPA obtained by merging Beam 1-based PPA, Beam 2-based PPA, and Beam 3-based PPA in the lower diagram of Fig. 21.

The processing unit 32 of the SAS (communication control device) 130 is only required to perform approval processing of grant or the like for a permission request (for example, a permission request in the GAA of Fig. 5) for use of a spectrum or a beam from another CBSD on the basis of Baseline PPA basically as illustrated in Fig. 22. That is, it is only necessary to perform the approval processing of grant or the like for a permission request for use of a frequency or a beam from another CBSD within a range that satisfies a condition that the aggregated interference at any point or a predetermined point in the Baseline PPA is equal to or less than the allowable value.

However, temporary constraints different from the above-described regular constraints may be imposed during operation. For example, activation (activation) of a protection area called Dynamic Protection Area (DPA) and appearance of a new Incumbent (primary system) and the like can be cited. In the fifth embodiment, even in such a case, it is possible to dynamically and quickly reconfigure the PPA for the CBSD, which contributes to improvement of spectrum use efficiency. The reconstructed PPA is referred to as Reconfigured PPA.

As a configuration for implementing the reconstruction of the PPA, the processing unit 32 of the SAS 130 defines two types of states "ACTIVE" and "SUSPENDED" for the beam-based PPA (PPA) corresponding to each beam in units of beams, and manages the state of the PPA in units of beams in the storage unit 35. "ACTIVE" corresponds to a state in which the PPA in units of beams is valid, and "SUSPENDED" corresponds to a state in which the PPA in units of beams is invalid. The processing unit 32 of the SAS 130 detects a constraint imposed during operation and individually sets the state of each beam with respect to the CBSD to "ACTIVE" or "SUSPENDED". The SAS 130 creates the Reconfigured PPA by merging only the beam-based PPA (PPA) "ACTIVE". Note that other states may be defined, such as "TERMINATED" meaning discarding or erasing unnecessary PAA.

In a case where the number of beam-based PPAs (PPAs) in units of beams is large, the SAS 130 may perform grouping of the beam-based PPAs (PPAs) and set the state ("ACTIVE" or "SUSPENDED") in units of groups. Examples of the grouping criterion include a degree of similarity of a beam-based PPA (PPA) contour or an azimuthal angle range, and the like. In the former case, beam-based PPAs (PPAs) having a high degree of similarity of contours of beam-based PPAs (PPAs) are grouped into one group. In the latter case, beam-based PPAs (PPAs) in which the peak directions of the beams belong to the same azimuthal angle range are grouped into one group.

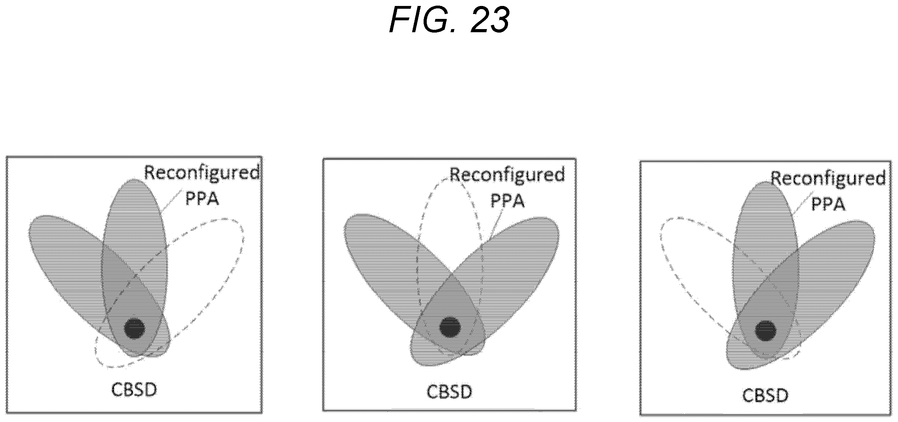

Fig. 23 illustrates three examples of Reconfigured PPAs obtained by reconstructing Baseline PPAs illustrated in Fig. 22.

The left diagram illustrates a Reconfigured PPA obtained in a case where Beam 1-based PPA and Beam 2-based PPA are set to "ACTIVE" and Beam 3-based PPA is set to "SUSPENDED".

The center diagram illustrates a Reconfigured PPA obtained in a case where Beam 1-based PPA and Beam 3-based PPA are set to "ACTIVE", and Beam 2-based PPA is set to "SUSPENDED".

The right diagram illustrates a Reconfigured PPA obtained in a case where Beam 2-based PPA and Beam 3-based PPA are set to "ACTIVE" and Beam 1-based PPA is set to "SUSPENDED".

Examples (1) to (6) of events that trigger a state transition of beam-based PPA (PPA) in units of beams will be described below.

(1) In a case where radio wave use by a radar or the like that may interfere with a beam related to a grant stored in a fixed satellite service (FSS) out of band emission (OOBE) purge list is detected, the SAS sets the state of the PPA of the beam related to the grant to "TERMINATED" (discarded). That is, the processing unit 32 of the SAS invalidates the state of the PPA of the beam in a case where it is detected that the use of the beam relating to the grant is disabled. The FSS OOBE Purge List is a list for protecting a fixed satellite service earth station (FSS earth station).

In a case where a radar or the like starts using radio waves (beams or the like) that can interfere with a beam related to a grant stored in the list, the grant should be discarded.

(2) In a case where it is detected that the use of the radio wave that can interfere with the beam related to the grant included in a Dynamic Protection Area (DPA) Move List has been started by the radar or the like, the processing unit 32 of the SAS sets the state of the PPA of the beam related to the grant to "SUSPENDED". That is, the processing unit 32 of the SAS invalidates the state of the PPA of the beam in a case where it is detected that the use of the beam relating to the grant is disabled. The DPA Move List is a list for protecting the DPA. For the grant stored in this list, the SAS instructs the CBSD to suspend radio wave transmission or move to another frequency channel in order to protect the radar during a period in which the radar uses a radio wave (beam or the like) that may interfere with the beam related to the grant.

(3) With respect to the grant included in the DPA Move List, in a case where the use of the radio wave by the radar or the like is terminated, the SAS sets the state of the PPA of the beam related to the grant to "ACTIVE". That is, the processing unit 32 of the SAS validates the state of the PPA of the beam in a case where it is detected that the use of the beam related to the grant is enabled.

(4) At the time of Coordinated Periodic Activities among SASs (CPAS), in a case where it is determined that a temporary constraint (for example, extension of suspension of grant) is newly required for a period exceeding the time of CPAS, the state of the PPA of the corresponding beam is set to "SUSPENDED". In the CPAS, a plurality of communication control devices 130 (SAS) performs processing such as calculation regarding highertier protection once every 24 hours. That is, the processing unit 32 of the SAS invalidates the state of the PPA of the beam in a case where it is detected that the use of the beam relating to the grant is disabled.

(5) The SAS changes the state of the corresponding PPA from "SUSPEND" to "ACTIVE" when the temporary constraint is released. That is, the processing unit 32 of the SAS validates the state of the PPA of the beam in a case where it is detected that the use of the beam related to the grant is enabled.

(6) In a case where a suspension request is received from the CBSD or CBSD User (that is, an operator), the SAS changes the PPA related to the designated beam from "ACTIVE" to "SUSPEND". In a case of receiving an active request from the CBSD or CBSD User (that is, an operator), the processing unit 32 of the SAS may change the state of PPA related to the designated beam from "SUSPEND" to "ACTIVE".

The SAS exchanges PPA information with another SAS. For example, information of PPA is exchanged in the CPAS. At this time, it is desirable to exchange at least information of Baseline PPA. In a case where both the SAS and the another SAS have a reconfiguration function of the PPA, it is desirable to exchange the information of the PPA in units of beams between the SAS and the another SAS.

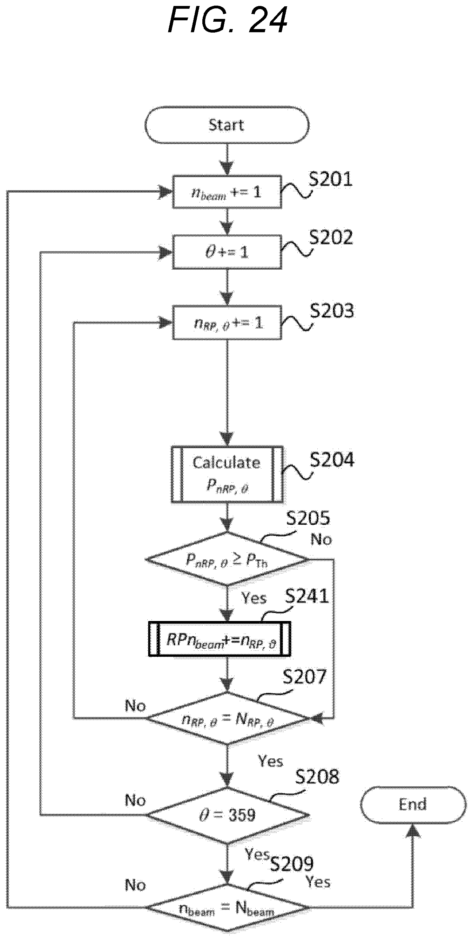

Fig. 24 is a flowchart of an example of processing of creating a PPA in units of beams according to the fifth embodiment. The processing of Fig. 24 is performed by the processing unit 32 of the SAS 130. Step S206 in the flowchart of Fig. 14 used in the description of the first embodiment is changed to step S241. Steps S201 to S205 and S207 to S209 are the same as those in the flowchart of Fig. 14.

In the processing of the flowchart of Fig. 14 in the first embodiment, the set RP is commonly used for all the beams, but in the processing of Fig. 24 in the fifth embodiment, the set RP is prepared for each beam. A set of $n_{beam}$-th beams is referred to as an $RPn_{beam}$. In step S241 in Fig. 24, the SAS 130 stores the index $n_{RP, \theta}$ of the reference point selected in step S205 in the set $RPn_{beam}$ for the corresponding beam ($n_{beam}$-th beam). Thus, a set of reference points $RPn_{beam}$ is acquired for each beam. PPA creation processing is performed by a method similar to that of the first embodiment using a set $RPn_{beam}$ acquired for each beam to create beam-based PPA (PPA) in units of beams.

Also in the fifth embodiment, as in the third embodiment (see Fig. 17) or the fourth embodiment (see Fig. 18), it is possible to limit the reference point to be a target for calculating the predetermined metric in consideration of the static constraint regarding the horizontal plane direction or the static constraint that does not depend on the horizontal plane direction.

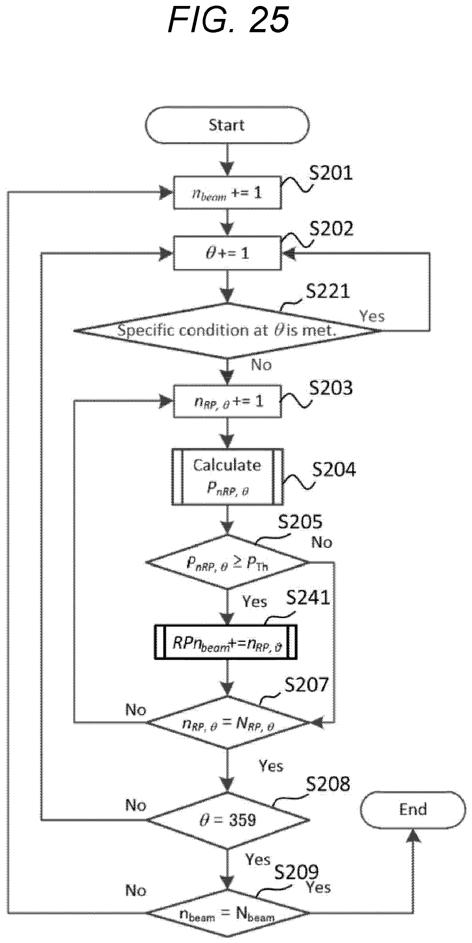

Fig. 25 is a flowchart of another example of the processing of creating the PPA in units of beams according to the fifth embodiment. In this processing, the set RP of beam units is generated in consideration of static constraints regarding the horizontal plane direction. The processing of Fig. 25 is performed by the processing unit 32 of the SAS 130. The same step S221 as that in Fig. 24 is added between the above-described steps S202 and S203 in Fig. 17. Since the description of the operation of step S221 is the same as the description made using Fig. 17, the description thereof will be omitted.

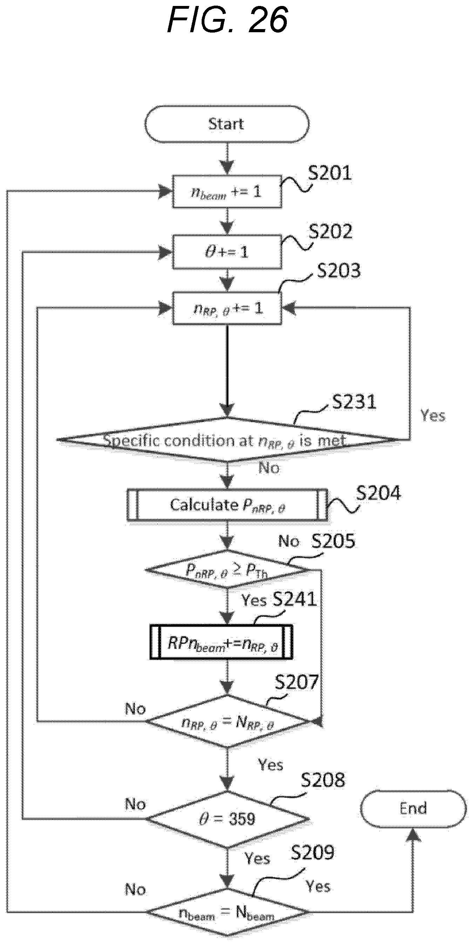

Fig. 26 is a flowchart of still another example of the processing of creating the PPA in units of beams according to the fifth embodiment. In this processing, the set RP of beam units is generated in consideration of a static constraint that does not depend on the horizontal plane direction. The processing of Fig. 26 is performed by the processing unit 32 of the SAS 130. The same step S231 as that in Fig. 18 is added between the above-described steps S203 and S204 in Fig. 24. Since the description of the operation of step S231 is the same as the description made using Fig. 17, the description thereof will be omitted.

As described above, according to the present embodiment, while calculating the beam-based PPA (PPA) in units of beams and managing the state of each beam-based PPA, only the beam-based PPA in the "ACTIVE" state is merged to create the PPA. The beam-based PPA of "SUSPEND" is excluded from merging targets. By excluding the beam-based PPA of "SUSPEND" from the frequency protection target, the spectrum can be used by other systems in the region, and the spectrum use efficiency can be improved. Furthermore, since the PPA is created by merging the beam-based PPAs, the reconstruction of the PPA also requires a small amount of calculation.

Note that the above-described embodiment illustrates examples for embodying the present disclosure, and the present disclosure can be implemented in various other forms. For example, various modifications, substitutions, omissions, or combinations thereof are possible without departing from the gist of the present disclosure. Forms in which such modifications, replacements, omissions, and the like are made are also included in the scope of the present disclosure and are likewise included in the invention described in the claims and the equivalent scopes thereof.

Furthermore, the effects of the present disclosure described herein are merely examples, and other effects may be provided.

Note that the present disclosure can have the following configurations.

[Item 1]

A communication control device, including:
a processing unit that calculates a metric based on radio wave signal strength for a plurality of reference points for each of a plurality of beams transmittable by a communication device, and creates a first protection zone in which the communication device is protected from radio wave interference on the basis of the metric.

[Item 2]

The communication control device according to item 1, in which

the plurality of reference points is set in each of a plurality of horizontal directions, and
the processing unit calculates the metric for the plurality of reference points in the plurality of horizontal directions for each of the beams.

[Item 3]

The communication control device according to item 2, in which

the processing unit selects one reference point on the basis of the metric in each of the horizontal directions, and
the processing unit sets a region surrounded by the selected reference points as the first protection zone.

[Item 4]

The communication control device according to item 2 or 3, in which
the processing unit selects a reference point having the metric equal to or greater than a threshold among the plurality of reference points, and sets a region specified by the selected reference point as the first protection zone.

[Item 5]

The communication control device according to any one of items 2 to 4, in which the plurality of reference points for each of the plurality of horizontal directions is commonly determined for the plurality of beams.

[Item 6]

The communication control device according to any one of items 2 to 5, in which
the processing unit calculates the plurality of reference points for each of the plurality of horizontal directions individually for each of the plurality of beams.

[Item 7]

The communication control device according to any one of items 1 to 6, in which
the processing unit determines the plurality of beams on the basis of a movable range and a step size of a beam in an

37

azimuth angle direction and a movable range and a step size of the beam in an elevation angle direction.

[Item 8]

The communication control device according to item 7, in which
the processing unit determines the plurality of reference points in a horizontal direction corresponding to an azimuth angle of the beam on the basis of a height position of the communication device, an elevation angle of the beam for each of the step sizes, and the azimuth angle of the beam.

[Item 9]

The communication control device according to item 8, in which
the processing unit sets an intersection of a straight line extending from a height position of the communication device in a direction of the elevation angle and a straight line extending in the horizontal direction at a reference height as the reference point.

[Item 10]

The communication control device according to item 3, in which
the processing unit selects, in each of the horizontal directions, a reference point farthest from the communication device among reference points having the metric equal to or greater than a threshold.

[Item 11]

The communication control device according to item 9, in which

the processing unit sequentially selects one beam from the plurality of beams and calculates the metric for the plurality of reference points for the selected beam in each of the plurality of horizontal directions, and
for a reference point at which the metric equal to or greater than the threshold is calculated, calculation of the metric is omitted for a beam to be selected next or later.

[Item 12]

The communication control device according to item 3, in which
the processing unit detects a region specified by a reference point having the metric less than the threshold, and determines to include the detected region in the first protection zone as a part of the first protection zone according to a size of the detected region.

[Item 13]

The communication control device according to any one of items 2 to 12, in which
the processing unit determines whether the beam satisfies a constraint in each of the horizontal directions, and omits calculation of the metric for the reference point in the horizontal direction that does not satisfy the constraint.

[Item 14]

The communication control device according to any one of items 2 to 12, in which the processing unit determines whether the beam satisfies a constraint for each of the reference points, and omits calculation of the metric for the reference point that does not satisfy the constraint.

[Item 15]

The communication control device according to any one of items 1 to 14, in which
the processing unit creates second protection zones in which the communication device is protected from radio wave interference for each of the beams on the basis of the metric.

[Item 16]

The communication control device according to item 15, in which
the processing unit selects one or more of the second protection zones out of the second protection zones for each of the beams, and creates the first protection zone by combining the selected second protection zones.

[Item 17]

The communication control device according to item 16, in which
the processing unit manages a valid or invalid state of the second protection zones for each of the beams and selects the second protection zone set to be valid out of the plurality of second protection zones.

[Item 18]

The communication control device according to item 17, in which
the processing unit determines availability of the plurality of beams, validates the second protection zone corresponding to the beam permitted to be used, and invalidates the second protection zone corresponding to the beam prohibited to be used.

[Item 19]

The communication control device according to item 18, in which
the processing unit receives information giving an instruction on validity or invalidity of the second protection zone from a first device, and enables or invalidates the second protection zone on the basis of the received information.

[Item 20]

The communication control device according to any one of items 1 to 19, in which
the processing unit creates the first protection zone for each of a plurality of the communication devices, and creates a third protection zone by combining a plurality of the first protection zones.

[Item 21]

A communication control method, including:
calculating a metric based on radio wave signal strength for a plurality of reference points for each of a plurality of beams transmittable by a communication device, and creating a first protection zone in which the communication device is protected from radio wave interference on the basis of the metric.

[Item 22]

A computer program for causing a computer to execute:

a step of calculating a metric based on radio wave signal strength for a plurality of reference points for each of a plurality of beams transmittable by a communication device; and
a step of creating a first protection zone in which the communication device is protected from radio wave interference on the basis of the metric.

REFERENCE SIGNS LIST

| | |
|---|---|
| 11 | Reception unit |
| 12 | Processing unit |
| 13 | Control unit |
| 14 | Transmission unit |
| 15 | Storage unit |
| 31 | Reception unit |
| 32 | Processing unit |

| 33 | Control unit |
| 34 | Transmission unit |
| 35 | Storage unit |
| 110, 110A, 110B, 110C | Communication device |
| 120 | Terminal |
| 130, 130A, 130B | Communication control device |
| 140 | Device (terminal) of PAL holder |

**Claims**

1.  A communication control device, comprising:
    a processing unit that calculates a metric based on radio wave signal strength for a plurality of reference points for each of a plurality of beams transmittable by a communication device, and creates a first protection zone in which the communication device is protected from radio wave interference on a basis of the metric.

2.  The communication control device according to claim 1, wherein

    the plurality of reference points is set in each of a plurality of horizontal directions, and
    the processing unit calculates the metric for the plurality of reference points in the plurality of horizontal directions for each of the beams.

3.  The communication control device according to claim 2, wherein

    the processing unit selects one reference point on a basis of the metric in each of the horizontal directions, and
    the processing unit sets a region surrounded by the selected reference points as the first protection zone.

4.  The communication control device according to claim 2, wherein
    the processing unit selects a reference point having the metric equal to or greater than a threshold among the plurality of reference points, and sets a region specified by the selected reference point as the first protection zone.

5.  The communication control device according to claim 2, wherein the plurality of reference points for each of the plurality of horizontal directions is commonly determined for the plurality of beams.

6.  The communication control device according to claim 2, wherein
    the processing unit calculates the plurality of reference points for each of the plurality of horizontal directions individually for each of the plurality of beams.

7.  The communication control device according to claim 1, wherein
    the processing unit determines the plurality of beams on a basis of a movable range and a step size of a beam in an azimuth angle direction and a movable range and a step size of the beam in an elevation angle direction.

8.  The communication control device according to claim 7, wherein
    the processing unit determines the plurality of reference points in a horizontal direction corresponding to an azimuth angle of the beam on a basis of a height position of the communication device, an elevation angle of the beam for each of the step sizes, and the azimuth angle of the beam.

9.  The communication control device according to claim 8, wherein
    the processing unit sets an intersection of a straight line extending from a height position of the communication device in a direction of the elevation angle and a straight line extending in the horizontal direction at a reference height as the reference point.

10. The communication control device according to claim 3, wherein
    the processing unit selects, in each of the horizontal directions, a reference point farthest from the communication device among reference points having the metric equal to or greater than a threshold.

11. The communication control device according to claim 9, wherein

the processing unit sequentially selects one beam from the plurality of beams and calculates the metric for the plurality of reference points for the selected beam in each of the plurality of horizontal directions, and

for a reference point at which the metric equal to or greater than the threshold is calculated, calculation of the metric is omitted for a beam to be selected next or later.

12. The communication control device according to claim 3, wherein
the processing unit detects a region specified by a reference point having the metric less than the threshold, and determines to include the detected region in the first protection zone as a part of the first protection zone according to a size of the detected region.

13. The communication control device according to claim 2, wherein the processing unit determines whether the beam satisfies a constraint in each of the horizontal directions, and omits calculation of the metric for the reference point in the horizontal direction that does not satisfy the constraint.

14. The communication control device according to claim 2, wherein
the processing unit determines whether the beam satisfies a constraint for each of the reference points, and omits calculation of the metric for the reference point that does not satisfy the constraint.

15. The communication control device according to claim 1, wherein
the processing unit creates second protection zones in which the communication device is protected from radio wave interference for each of the beams on a basis of the metric.

16. The communication control device according to claim 15, wherein
the processing unit selects one or more of the second protection zones out of the second protection zones for each of the beams, and creates the first protection zone by combining the selected second protection zones.

17. The communication control device according to claim 16, wherein
the processing unit manages a valid or invalid state of the second protection zones for each of the beams and selects the second protection zone set to be valid out of the plurality of second protection zones.

18. The communication control device according to claim 17, wherein
the processing unit determines availability of the plurality of beams, validates the second protection zone corresponding to the beam permitted to be used, and invalidates the second protection zone corresponding to the beam prohibited to be used.

19. The communication control device according to claim 18, wherein
the processing unit receives information giving an instruction on validity or invalidity of the second protection zone from a first device, and enables or invalidates the second protection zone on a basis of the received information.

20. The communication control device according to claim 1, wherein
the processing unit creates the first protection zone for each of a plurality of the communication devices, and creates a third protection zone by combining a plurality of the first protection zones.

21. A communication control method, comprising:
calculating a metric based on radio wave signal strength for a plurality of reference points for each of a plurality of beams transmittable by a communication device, and creating a first protection zone in which the communication device is protected from radio wave interference on a basis of the metric.

22. A computer program for causing a computer to execute:

a step of calculating a metric based on radio wave signal strength for a plurality of reference points for each of a plurality of beams transmittable by a communication device; and
a step of creating a first protection zone in which the communication device is protected from radio wave interference on a basis of the metric.

FIG. 1

EP 4 362 524 A1

# FIG. 2

# FIG. 3

FIG. 4

EP 4 362 524 A1

# FIG. 5

EXISTING
LAYER
Incumbent Tier

PRIORITY ACCESS LAYER
Priority Access Tier

GENERAL AUTHORIZED ACCESS LAYER
General Authorized Access(GAA) Tier

## FIG. 6

120                          120                          110

                                                                        **T101**
                                                          **T102** ┌──────────────────────────┐
                                                                   │ CALCULATE COMMUNICATION PARAMETER │
                                                                   │ TO BE USED BY COMMUNICATION DEVICE │
                                                                   │ OF SECONDARY SYSTEM │
                                                                   └──────────────────────────┘
                              **T103** ┌──────────────────────────┐ ┌──────────────────────────┐
                                       │ ACQUIRE COMMUNICATION PARAMETER │ │ NOTIFY COMMUNICATION DEVICE OF │
                                       │ TO BE USED BY COMMUNICATION DEVICE │ │ SECONDARY SYSTEM OF │
                                       │ (BASE STATION AND TERMINAL) │ │ COMMUNICATION PARAMETER │
                                       │ TO BE USED BY SECONDARY SYSTEM │ └──────────────────────────┘
                              **T104** └──────────────────────────┘
                                       ┌──────────────────────────┐
                                       │ SET COMMUNICATION PARAMETER │
                                       │ TO BE USED BY COMMUNICATION DEVICE │
                                       │ (BASE STATION) ITSELF │
                              **T106**  **T105** └──────────────────────────┘

**T106** ┌──────────────────────────┐ ┌──────────────────────────┐ ┌──────────────────────────┐
         │ ACQUIRE COMMUNICATION PARAMETER │ │ ACQUIRE COMMUNICATION PARAMETER │ │ NOTIFY TERMINAL OF COMMUNICATION │
         │ TO BE USED BY COMMUNICATION DEVICE │ │ TO BE USED BY COMMUNICATION DEVICE │ │ PARAMETER TO BE USED BY TERMINAL │
         │ (TERMINAL) OF SECONDARY SYSTEM │ │ (TERMINAL) OF SECONDARY SYSTEM │ │ SUBORDINATE TO COMMUNICATION DEVICE │
         └──────────────────────────┘ └──────────────────────────┘ │ (BASE STATION) ITSELF │
**T107** ┌──────────────────────────┐ ┌──────────────────────────┐ └──────────────────────────┘
         │ SET COMMUNICATION PARAMETER │ │ SET COMMUNICATION PARAMETER │
         │ TO BE USED BY COMMUNICATION DEVICE │ │ TO BE USED BY COMMUNICATION DEVICE │ **T107**
         │ (TERMINAL) ITSELF │ │ (TERMINAL) ITSELF │
**T108** └──────────────────────────┘ └──────────────────────────┘
         ┌──────────────────────────┐ ┌──────────────────────────┐ **T108**
         │ PERFORM COMMUNICATION WITH │ │ PERFORM COMMUNICATION WITH │
         │ ANOTHER COMMUNICATION DEVICE │ │ ANOTHER COMMUNICATION DEVICE │
         │ (TERMINAL) OF SECONDARY SYSTEM │ │ (TERMINAL) OF SECONDARY SYSTEM │
         └──────────────────────────┘ └──────────────────────────┘

EP 4 362 524 A1

# FIG. 7

# FIG. 8

COMMUNICATION DEVICE 110

TRANSMISSION UNIT 14

PROCESSING UNIT 12

STORAGE UNIT 15

CONTROL UNIT 13

RECEPTION UNIT 11

COMMUNICATION CONTROL DEVICE 130

RECEPTION UNIT 31

CONTROL UNIT 13

STORAGE UNIT 35

PROCESSING UNIT 32

TRANSMISSION UNIT 34

EP 4 362 524 A1

*FIG. 9*

```
┌─────────────────┐          ┌─────────────────┐
│   COMMUNICATION │          │    DEVICE OF    │
│  CONTROL DEVICE │──────────│  PAL HOLDER 140 │
│       130       │          │                 │
└─────────────────┘          └─────────────────┘
```

# FIG. 10

EP 4 362 524 A1

*FIG. 11*

# FIG. 12

EP 4 362 524 A1

FIG. 13

# FIG. 14

Start

$n_{beam}\ += 1$ — S201

$\theta\ += 1$ — S202

$n_{RP,\ \theta}\ += 1$ — S203

Calculate $P_{nRP,\ \theta}$ — S204

S205
$P_{nRP,\ \theta} \geq P_{Th}$ — No

Yes — S206

$\textbf{RP}\ += n_{RP,\ \theta}$ — S206

S207
No — $n_{RP,\ \theta} = N_{RP,\ \theta}$

Yes

S208
No — $\theta = 359$

Yes — S209

No — $n_{beam} = N_{beam}$ — Yes

End

# FIG. 15

# FIG. 16

# FIG. 17

# FIG. 18

# FIG. 19

Restricted area

E1

Peak direction at
horizontal plane

CBSD

Restricted area

E1

Peak direction at
horizontal plane

CBSD

EP 4 362 524 A1

FIG. 20

FIG. 21

# FIG. 22

*FIG. 23*

# FIG. 24

```
                    ┌─────────────┐
                    │    Start    │
                    └─────────────┘
                           │
                           ▼
                    ┌─────────────┐
                    │ n_beam += 1 │  ～ S201
                    └─────────────┘
                           │
                           ▼
                    ┌─────────────┐
                    │  θ += 1     │  ～ S202
                    └─────────────┘
                           │
                           ▼
                    ┌─────────────┐
                    │ n_RP,θ += 1 │  ～ S203
                    └─────────────┘
                           │
                           ▼
                    ┌─────────────┐
                    │  Calculate  │  ～ S204
                    │   P_nRP,θ   │
                    └─────────────┘
                           │
                           ▼          S205
                      ◇───────────◇      No
                     │ P_nRP,θ ≥ P_Th │ ───────┐
                      ◇───────────◇            │
                           │ Yes    S241       │
                           ▼                    │
                    ┌─────────────┐             │
                    │ RPn_beam += n_RP,θ │      │
                    └─────────────┘             │
                           │        S207        │
                           ▼                    │
                 No   ◇───────────◇             │
              ┌────── │ n_RP,θ = N_RP,θ │ ◀─────┘
              │        ◇───────────◇
              │            │ Yes
              │            ▼         S208
              │   No  ◇───────────◇         ┌────────┐
              │    ┌── │  θ = 359  │        │  End   │
              │    │    ◇───────────◇        └────────┘
              │    │        │ Yes  S209           ▲
              │    │        ▼            Yes      │
              │    │   ◇───────────◇ ────────────┘
              │    │   │ n_beam = N_beam │
              │    │    ◇───────────◇
              │    │        │ No
              └────┴────────┘
```

$n_{beam} += 1$ — S201

$\theta += 1$ — S202

$n_{RP,\theta} += 1$ — S203

Calculate $P_{nRP,\theta}$ — S204

S205 · No · $P_{nRP,\theta} \geq P_{Th}$ · Yes

S241 · $RPn_{beam} += n_{RP,\theta}$

S207 · No · $n_{RP,\theta} = N_{RP,\theta}$ · Yes

S208 · No · $\theta = 359$ · Yes

S209 · No · $n_{beam} = N_{beam}$ · Yes

# FIG. 25

# FIG. 26

```
                    ┌──────────────┐
                    │    Start     │
                    └──────┬───────┘
                           │
              ┌─────────────────────┐  S201
         ┌───→│   n_beam += 1       │
         │    └──────────┬──────────┘
         │               │
         │    ┌─────────────────────┐  S202
      ┌──┼───→│   θ += 1            │
      │  │    └──────────┬──────────┘
      │  │               │
      │  │    ┌─────────────────────┐  S203
   ┌──┼──┼───→│   n_RP,θ += 1      │←──┐
   │  │  │    └──────────┬──────────┘   │
   │  │  │               │              │
   │  │  │               │          Yes │
   │  │  │        Specific condition    │  S231
   │  │  │        at n_RP,θ is met ─────┘
   │  │  │               │ No
   │  │  │    ┌─────────────────────┐  S204
   │  │  │    │  Calculate P_nRP,θ  │
   │  │  │    └──────────┬──────────┘
   │  │  │          No   │  S205
   │  │  │        P_nRP,θ ≥ P_Th
   │  │  │           Yes │  S241
   │  │  │    ┌─────────────────────┐
   │  │  │    │  RP_n_beam += n_RP,θ│
   │  │  │    └──────────┬──────────┘
   │  │  │       No      │  S207
   │  │  └──── n_RP,θ = N_RP,θ
   │  │               Yes │
   │  │       No      │  S208
   │  └────────── θ = 359
   │                Yes │  S209
   │       No      │
   └──────── n_beam = N_beam ──Yes──→ End
```

S231  Specific condition at $n_{RP,\theta}$ is met — Yes

S204  Calculate $P_{nRP,\theta}$

S205  $P_{nRP,\theta} \geq P_{Th}$

S241  $RP_{n_{beam}} += n_{RP,\vartheta}$

S207  $n_{RP,\theta} = N_{RP,\theta}$

S208  $\theta = 359$

S209  $n_{beam} = N_{beam}$

<div style="text-align:center">**INTERNATIONAL SEARCH REPORT**</div>

| International application No. |
| --- |
| **PCT/JP2022/013078** |

**A.     CLASSIFICATION OF SUBJECT MATTER**

*H04W 16/14*(2009.01)i; *H04W 16/18*(2009.01)i; *H04W 16/28*(2009.01)i
FI:   H04W16/28; H04W16/18 110; H04W16/14

According to International Patent Classification (IPC) or to both national classification and IPC

**B.     FIELDS SEARCHED**

Minimum documentation searched (classification system followed by classification symbols)

H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| X | US 2020/0162929 A1 (TELEFONAKTIEBOLAGET LM ERICSSON (PUBL)) 21 May 2020 (2020-05-21) paragraphs [0053]-[0056], [0109] | 1-2, 4, 20-22 |
| A | paragraphs [0053]-[0056], [0109] | 3, 5-19 |
| A | US 2019/0357155 A1 (COMMSCOPE TECHNOLOGIES LLC) 21 November 2019 (2019-11-21) paragraphs [0026]-[0030] | 1-22 |
| A | US 2021/0022005 A1 (COMMSCOPE TECHNOLOGIES LLC) 21 January 2021 (2021-01-21) paragraphs [0028]-[0033] | 1-22 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 May 2022** | **24 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/013078**

| Patent document cited in search report | | | Publication date (day/month/year) | Patent family member(s) | Publication date (day/month/year) |
|---|---|---|---|---|---|
| US | 2020/0162929 | A1 | 21 May 2020 | WO 2018/215974 A1 paragraphs [0053]-[0056], [0112] | |
| US | 2019/0357155 | A1 | 21 November 2019 | (Family: none) | |
| US | 2021/0022005 | A1 | 21 January 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Requirements for Commercial Operation in the U.S. 3550-3700 MHz Citizens Broadband Radio Service Band. *WINNF-TS-0112-V1.9.1*
- *Electronic Code of Federal Regulations, Title 47, Chapter I, Subchapter A, Part 1, Subpart X Spectrum Leasing, https://ecfr.federalregister.gov/current/title-47/chapter-I/subchapter-D/part-96*
- Conformance and Performance Test Technical Specification; SAS as Unit Under Test (UUT). *WINNF-TS-0061-V1.5.1 Test and Certification for Citizens Broadband Radio Service (CBRS), https://cbrs.wirelessinnovation.org/release-1-of-the-baseline-standard-specifications*
- *WINNF-TS-0016-V1.2.4 Signaling Protocols and Procedures for Citizens Broadband Radio Service (CBRS): Spectrum Access System (SAS) - Citizens Broadband Radio Service Device (CBSD) Interface Technical Specification, https://cbrs.wirelessinnovation.org/release-1-of-the-baseline-standard-specifications*

- *940660 D02 CBSD Handshake Procedures v02, https://apps.fcc.gov/kdb/GetAttachment.html?id=RQe7oZJVSW t0fCcNiBV%2Bfw%3D%3D&desc=940660%20D02 %20CPE-CBSD%20Handshake%20Procedures%20v02&tracking_number=22929 7*
- CBRS Operational and Functional Requirements (Release 2). *WINNF-TS-1001-V1.2.0, https://cbrs.wirelessinnovation.org/enhancements-to-baseline-specifications*
- Signaling Protocols and Procedures for Citizens Broadband Radio Service (CBRS): Extensions to Spectrum Access System (SAS) - Citizens Broadband Radio Service Device (CBSD) Interface Technical Specification (Release 2). *WINNF-TS-3002-V1.1.1, https://cbrs.wirelessinnovation.org/enhancements-to-baseline-specifications*